# EUROPEAN PATENT APPLICATION

(11) **EP 4 787 371 A1**
(43) Date of publication of application: **05.08.2026**
(21) Application number: 24913338.0
(22) Date of filing: 29.10.2024
(51) Int. Cl.: G10L 19/16, G10L 19/002, H04N 21/439, G06F 16/63

(54) **ELECTRONIC DEVICE AND METHOD FOR OUTPUTTING MEDIA BY USING CONFIGURATION INFORMATION ABOUT FRAME, AND STORAGE MEDIUM**

(30) Priority: 28.12.2023 KR 20230195806; 02.01.2024 KR 20240000614; 10.01.2024 KR 20240004188
(71) Applicant: Samsung Electronics Co., Ltd., Suwon-si, Gyeonggi-do 16677 (KR)
(72) Inventor: KIM, Hongseob, Suwon-si Gyeonggi-do 16677 (KR); HEO, Jin, Suwon-si Gyeonggi-do 16677 (KR); PARK, Hyejeong, Suwon-si Gyeonggi-do 16677 (KR); CHOI, Jinho, Suwon-si Gyeonggi-do 16677 (KR)
(74) Representative: HGF
(86) International application number: PCT/KR2024/016701
(87) International publication number: WO 2025/143501

(57) **Abstract**

This electronic device may comprise: a memory for storing instructions; and at least one processor. When executed individually or collectively by the at least one processor, the instructions can cause the electronic device to: obtain a frame set including a plurality of frames of audio content to be played back; generate frame configuration information about the frame set including one or more frames from among the plurality of frames; and decode, by using the frame configuration information, the frame set including the one or more frames. The frame configuration information can include the number of the one or more frames and the size of each of the one or more frames.

## Description

### [Technical Field]

The following descriptions relate to an electronic device, a method, and a storage medium for outputting media using configuration information on a frame.

### [Background Art]

An electronic device may obtain data on media. For example, the media may include audio or a video. For example, the data may be referred to as a stream of the media. For example, the data may include a plurality of frames. The electronic device may output (or playback) the media by processing the plurality of frames.

The above-described information may be provided as a related art for the purpose of helping understanding of the present disclosure. No argument or decision is made as to whether any of the above description may be applied as a prior art related to the present disclosure.

### [Disclosure]

### [Technical Solution]

An electronic device may comprise memory storing instructions. The electronic device may comprise at least one processor. The instructions, when the at least one processor is executed individually or collectively, cause the electronic device to obtain a frame set including a plurality of frames of an audio content to be played. The instructions, when the at least one processor is executed individually or collectively, cause the electronic device to generate frame configuration information of the frame set including one or more frames from among the plurality of frames. The frame configuration information may include the number of the one or more frames and a size of each of the one or more frames. The instructions, when the at least one processor is executed individually or collectively, cause the electronic device to perform decoding of the frame set including the one or more frames using the frame configuration information.

An electronic device may comprise a first processor. The electronic device may comprise a second processor for decoding an audio content. The first processor may be configured to obtain a frame set including a plurality of frames of the audio content. The first processor may be configured to generate frame configuration information of the frame set including one or more frames from among the plurality of frames. The frame configuration information may include the number of the one or more frames and a size of each of the one or more frames. The first processor may be configured to generate, using the frame configuration information, one or more headers determined according to a codec type of the second processor. Each of the one or more headers may include the size of each of the one or more frames. The first processor may be configured to transmit, to the second processor, the one or more headers and the frame set including the one or more frames. The second processor may be configured to perform the decoding of the frame set.

### [Description of the Drawings]

FIG. 1 is a block diagram of an electronic device in a network environment, according to various embodiments.
FIG. 2 is a block diagram of an audio module, according to various embodiments.
FIG. 3 illustrates an example of a method in which an electronic device processes frames of media in order to play a frame indicated by a seek request, according to an embodiment.
FIG. 4 is a simplified block diagram of an exemplary electronic device, according to an embodiment.
FIG. 5 illustrates an example of an operation flow for a method in which an electronic device outputs a media stream using configuration information of a frame, according to an embodiment.
FIG. 6A illustrates an example of an operation flow for a method in which an electronic device generates configuration information of a frame, according to an embodiment.
FIG. 6B illustrates an example of a frame set including a frame indicated according to a seek request, according to an embodiment.
FIG. 6C illustrates an example of a frame set including configuration information of a frame, according to an embodiment.
FIG. 7 illustrates an example of an operation flow for a method of determining a unit of media to be transmitted to a decoder, according to an embodiment.
FIG. 8A illustrates an example of an operation flow for a method of transmitting a frame set based on a codec type of a decoder, according to an embodiment.
FIG. 8B illustrates an example of a frame set according to a codec type of a decoder, according to an embodiment.
FIG. 9 illustrates an example of an operation flow for a method of transmitting a frame set based on capability information of a decoder, according to an embodiment.
FIGS. 10A to 10C illustrate an example of a signal flow between a plurality of processors for a method of outputting media using configuration information of a frame, according to an embodiment.
FIG. 11 illustrates an example of an operation flow for a method in which an electronic device generates frame configuration information of a frame set of an audio content and performs decoding using the generated frame configuration information, according to an embodiment.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

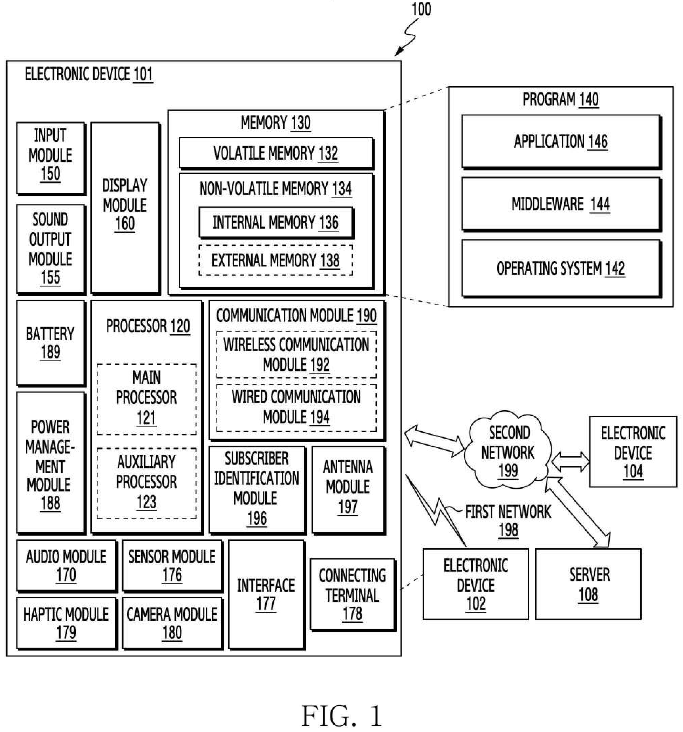

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

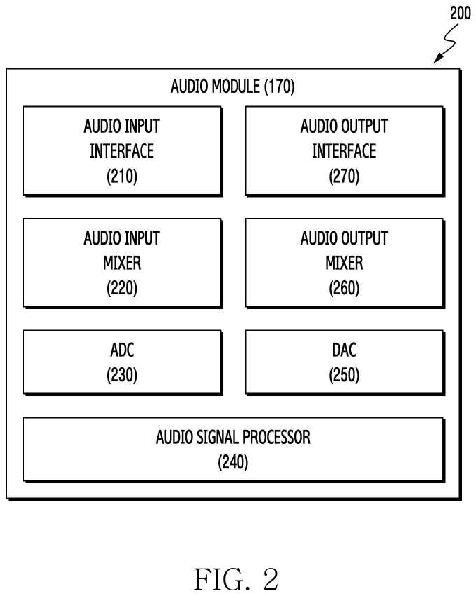

FIG. 2 is a block diagram of an audio module, according to various embodiments.

Referring to a block diagram 200 of FIG. 2, an audio module 170 may include, for example, an audio input interface 210, an audio input mixer 220, an analog to digital converter (ADC) 230, an audio signal processor 240, a digital to analog converter (DAC) 250, an audio output mixer 260, or an audio output interface 270.

The audio input interface 210 may receive an audio signal corresponding to a sound obtained from the outside of an electronic device 101, through a microphone (e.g., a dynamic microphone, a condenser microphone, or a piezo microphone) configured as a portion of the input module 150 or configured separately from the electronic device 101. For example, in a case that an audio signal is obtained from an external electronic device 102 (e.g., a headset or a microphone), the audio input interface 210 may receive the audio signal by being connected to the external electronic device 102 directly through a connection terminal 178, or wirelessly (e.g., Bluetooth communication) through a wireless communication module 192. According to an embodiment, the audio input interface 210 may receive a control signal (e.g., a volume adjustment signal received through an input button) related to the audio signal obtained from the external electronic device 102. The audio input interface 210 may include a plurality of audio input channels, and may receive different audio signals for each corresponding audio input channel among the plurality of audio input channels. According to an embodiment, additionally or alternatively, the audio input interface 210 may receive an audio signal from another component (e.g., a processor 120 or memory 130) of the electronic device 101.

The audio input mixer 220 may synthesize a plurality of input audio signals into at least one audio signal. For example, according to an embodiment, the audio input mixer 220 may synthesize a plurality of analog audio signals input through the audio input interface 210 into at least one analog audio signal.

The ADC 230 may convert an analog audio signal into a digital audio signal. For example, according to an embodiment, the ADC 230 may convert an analog audio signal received through the audio input interface 210 or, additionally or alternatively, an analog audio signal synthesized through the audio input mixer 220 into a digital audio signal.

The audio signal processor 240 may perform various processing on a digital audio signal input through the ADC 230 or a digital audio signal received from another component of the electronic device 101. For example, according to an embodiment, the audio signal processor 240 may perform, for one or more digital audio signals, a change of a sampling rate, application of one or more filters, interpolation processing, amplification or attenuation of all or some frequency bands, noise processing (e.g., noise or echo attenuation), channel changing (e.g., switching between mono and stereo), mixing, or extraction of a designated signal. According to an embodiment, one or more functions of the audio signal processor 240 may be implemented in a form of an equalizer.

The DAC 250 may convert a digital audio signal into an analog audio signal. For example, according to an embodiment, the DAC 250 may convert a digital audio signal processed by the audio signal processor 240 or a digital audio signal obtained from the other component (e.g., the processor 120 or the memory 130) of the electronic device 101 into an analog audio signal.

The audio output mixer 260 may synthesize a plurality of audio signals to be output into at least one audio signal. For example, according to an embodiment, the audio output mixer 260 may synthesize an audio signal converted into an analog audio signal through the DAC 250 and another analog audio signal (e.g., an analog audio signal received through the audio input interface 210) into at least one analog audio signal.

The audio output interface 270 may output, to the outside of the electronic device 101 through a sound output module 155, an analog audio signal converted through the DAC 250 or, additionally or alternatively, an analog audio signal synthesized by the audio output mixer 260. The sound output module 155 may include, for example, a speaker, such as a dynamic driver or a balanced armature driver, or a receiver. According to an embodiment, the sound output module 155 may include a plurality of speakers. In this case, the audio output interface 270 may output an audio signal having a plurality of different channels (e.g., stereo, or 5.1 channels) through at least a portion of the plurality of speakers. According to an embodiment, the audio output interface 270 may output an audio signal by being connected to the external electronic device 102 (e.g., an external speaker or a headset) directly through the connection terminal 178, or wirelessly through the wireless communication module 192.

According to an embodiment, the audio module 170 may generate at least one digital audio signal by synthesizing a plurality of digital audio signals using at least one function of the audio signal processor 240, without separately including the audio input mixer 220 or the audio output mixer 260.

According to an embodiment, the audio module 170 may include an audio amplifier (not illustrated) (e.g., speaker amplification circuitry) configured to amplify an analog audio signal input through the audio input interface 210 or an audio signal to be output through the audio output interface 270. According to an embodiment, the audio amplifier may be configured as a module separate from the audio module 170.

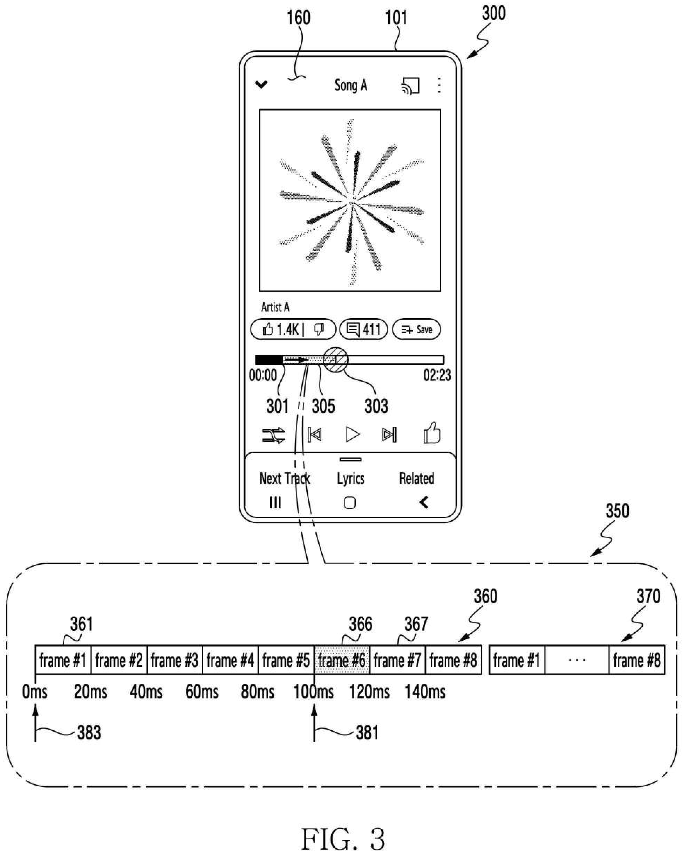

FIG. 3 illustrates an example of a method in which an electronic device processes frames of media in order to play a frame indicated by a seek request, according to an embodiment.

An electronic device 101 of FIG. 3 may be an example of the electronic device 101 of FIG. 1. For example, a display 160 of the electronic device 101 may be included in the display module 160 of FIG. 1.

FIG. 3 illustrates an example 300 in which the electronic device 101 receives a seek request by a user while outputting (or playing) media. For convenience of description, in the example 300, a case in which the media is music and data of the media includes audio is illustrated, but an embodiment of the present disclosure is not limited thereto. For example, the data of the media may include the audio and a video output together with the audio. For example, the data of the media may be referred to as a media file, a media stream, media content, or media information.

Referring to the example 300, the electronic device 101 may output (or play) the media. For example, the electronic device 101 may output a screen indicating that the media is played through the display 160. In addition, for example, the electronic device 101 may output audio of the media through an output device (not illustrated) (e.g., a speaker). For example, the output device may include at least a portion of the sound output module of FIG. 1. In the example 300, the electronic device 101 may be outputting a data portion (e.g., frame) of the media corresponding to a timing 301 among a running time (e.g., 2 minutes and 23 seconds) of the media. For example, the running time may represent a total time length of the media.

Referring to the example 300, the electronic device 101 may obtain an input 303 of a user for a seek request for the media. For example, the input 303 may include a touch input for an area of the display 160 of the electronic device 101. However, the embodiment of the present disclosure is not limited thereto. For example, the input 303 may include a gesture or a voice. For example, the input 303 may be used to indicate a timing 305 after the timing 301 among the running time of the media. For example, the electronic device 101 may receive (or recognize or identify) the seek request by obtaining the input 303. For example, by receiving the seek request according to the input 303, the electronic device 101 may output a data portion (e.g., a frame) of the media corresponding to the timing 305 after the timing 301. In the example 300 of FIG. 3, the timing 305 is illustrated to indicate a time after the timing 301, but it is only for convenience of explanation, and the embodiment of the present disclosure is not limited thereto. For example, the timing 305 may indicate a time before the timing 301.

As in the example 300, the electronic device 101 may receive the input 303 requesting a seek for the timing 305, cease playing the data portion of the media corresponding to the timing 301 according to the received input 303, and start playing the data portion of the media corresponding to the timing 305. In this case, in order to play the data portion of the media corresponding to the timing 305, the electronic device 101 may perform processing on the data of the media. For example, the processing may include removal (or skipping or discarding) of at least a portion of a configuration of the media. In the example, the at least portion may include a data portion (e.g., one or more frames) of the media between the timing 301 and the timing 305. For a specific example related thereto, an example 350 of FIG. 3 may be referred to.

Referring to the example 350, the electronic device 101 may perform the removal (or skipping or discarding) of the at least portion. For example, the at least portion may include one or more frames of the media. For example, the media may be configured as frames. For example, in a case that the media is audio, the frames may be referred to as audio frames. For example, in a case that the media is a video, the frames may be referred to as video frames. For example, in a case that the media includes both a video and audio, the frames may include video frames and audio frames. The frame may include amplitude (or loudness) information of a signal at a specific time duration (or timing). For example, in a case that the frame is a frame of audio data, the signal may be an audio signal.

In the example, a case in which the media is configured as the frames is described, but the embodiment of the present disclosure is not limited thereto. For example, the media may be configured as frame sets. Each of the frame sets may be referred to as one structure including a plurality of frames. For example, the frame set may be referred to as a chunk or chunk data. For example, in order to reduce a current consumed when playing the media, the electronic device 101 may configure the frames in a frame set unit, read for each frame set, or transmit them to a decoder for each frame set. For example, the decoder may refer to a media decoder (or audio decoder) that performs decoding to play (or output) the media. In other words, in order to reduce the number of times the data of the media is read, the electronic device 101 may process the media for each frame set rather than for each frame. In a case that the media is audio, the above-described play method may be referred to as a low-power audio play method.

For example, the electronic device 101 may recognize a frame set 360 of the media. For example, the electronic device 101 may obtain frame sets of the media stored in memory (e.g., the memory 130 of FIG. 1) of the electronic device 101 or frame sets of the media obtained from an external electronic device (not illustrated) (or a server). For example, the stored frame sets and the obtained frame sets may represent data configuring the media. The electronic device 101 may recognize the frame set 360 among frame sets (e.g., the stored frame sets or the obtained frame sets) configuring the media according to the input 303. For example, the electronic device 101 may recognize the frame set 360 including a frame 366 corresponding to the timing 305 at which the seek is requested according to the input 303. For example, frame sets 360 and 370 may be included in the frame sets (e.g., the stored frame sets or the obtained frame sets) configuring the media.

For example, the electronic device 101 may configure the configuration of the media for each frame set in order to reduce current consumption. In a case that the media is configured for each frame set, the electronic device 101 may not directly recognize the frame 366 according to the input 303, but may recognize the frame set 360 including the frame 366. For example, the electronic device 101 may identify a time value 383 (e.g., 0 ms) when an initial frame 361 of the frame set 360 is initiated, rather than a time value 381 (e.g., 100 ms) when the frame 366 among the media is initiated. The time value 383 being identified instead of the time value 381 may be because the configuration of the media is configured for each frame set. Referring to the above, as a result of the seek request, a frame (e.g., the frame 366) different from the frame (e.g., the initial frame 361) indicated by the input 303 may be misrecognized.

In addition, in a case that the media includes a video and audio, even if a seek result for the video indicates the time value 381, a seek result for the audio may indicate the time value 383, and the video may wait without being output until the audio indicates the time value 381. This may be because the video is rendered according to an output time of the audio to match synchronization between the video and the audio. For example, in the example 350 of FIG. 3, in a case that thetime value 383 (e.g., 0 ms) is recognized according to the seek request for the audio, and a video content portion corresponding to the time value 381 (e.g., 100 ms) is recognized according to the seek request for the video, an output of the video may be performed after waiting for 100 ms. This may be because the video is rendered according to the output time of the audio.

In the example 350 of FIG. 3, a case in which each of the time values 381 and 383 is defined as an offset from a time at which the frame set 360 is initiated is illustrated, but the embodiment of the present disclosure is not limited thereto. For example, each of the time values 381 and 383 may be defined as an offset from an initial frame (not illustrated) among the frames of the media.

For example, the electronic device 101 may perform decoding for the media. For example, in a case that the media is configured for each frame set, the electronic device 101 may perform decoding for each frame set. Alternatively, for example, in a case that the decoding is performed based on an offloading method, the electronic device 101 may perform decoding for each frame set. The offloading method may be referred to as offroad, offloading, offroad decoding, or offloading technique. For example, the offloading method may be performed by an external electronic device (e.g., the electronic device 102 of FIG. 1) different from the electronic device 101, or may include a case in which another processor within the electronic device 101, different from a processor (e.g., the processor 120 of FIG. 1) within the electronic device 101 performing processing (e.g., demuxing, reconfiguration) for the media, includes a decoder (or media decoder, audio decoder). As described above, in a case that the electronic device 101 perform decoding for each frame set, the frames in the frame set to be decoded may not be reconfigured, and thus a play (or seek) operation from a desired frame may not be performed. For example, the electronic device 101 may not perform reconfiguration (e.g., removal (or skipping, discarding) of some frames) of the frame set 360 during decoding. In other words, in a case that the electronic device 101 (or the processor within the electronic device 101) uses the offloading method for the audio, since it does not directly manage the decoder for the audio, it may not adjust decoded audio data, may not discard invalid decoded audio data, and may not perform a seek operation to a frame at a desired position. Accordingly, the electronic device 101 may perform decoding from the frame 366 within the seek-requested frame set 360, and may perform decoding from the initial frame 361 of the frame set 360.

For example, in a case that an error in decoding occurs at the frame 366 while performing decoding of the frame set 360, the electronic device 101 may perform decoding from the frame set 370 subsequent to the frame set 360 rather than performing decoding from a frame 367 subsequent to the frame 360. Alternatively, in a case that an error in decoding occurs at the frame 366, since the electronic device 101 has no way to check the frame 367 subsequent to the frame 366 or the frame set 370, decoding for the media may fail.

For example, in a case that the electronic device 101 transmits and processes data for each frame set while providing a streaming service through a network, latency may occur according to a size of a frame set.

Hereinafter, according to embodiments of the present disclosure, a device, a method, and a storage medium may generate configuration information including the number of frames included in a frame set, a size of each of the frames, a time duration of each of the frames, and a timestamp indicating an initial frame of a frame set. For example, the configuration information may be referred to as metadata or frame configuration information. According to embodiments of the present disclosure, the device, the method, and the storage medium may perform an accurate seek operation by accurately recognizing a frame according to a seek request and removing an unnecessary frame using the configuration information, even if the media is configured for each frame set. In addition, according to embodiments of the present disclosure, the device, the method, and the storage medium may perform recovery when an error in decoding occurs by delivering a frame set including the configuration information to the decoder, even when decoding is performed for each frame set (e.g., offloading). In addition, according to embodiments of the present disclosure, the device, the method, and the storage medium may prevent latency by adjusting a size of a frame set in advance when providing the streaming service through the network.

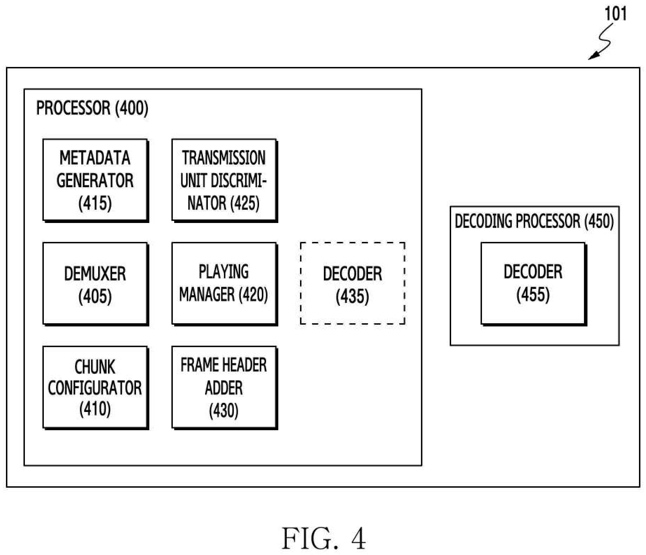

FIG. 4 is a simplified block diagram of an exemplary electronic device, according to an embodiment.

An electronic device 101 of FIG. 4 may be an example of the electronic device 101 of FIG. 1. For example, the electronic device 101 may include a processor 400 and/or a decoding processor 450. For example, the processor 400 may include at least a portion of the processor 120 of FIG. 1. For example, the decoding processor 450 may include at least a portion of the audio module 170 of FIG. 1. For example, the decoding processor 450 may include the ADC 230 and the DAC 250 of FIG. 2. However, an embodiment of the present disclosure is not limited thereto. In addition, for example, the decoding processor 450 may include at least a portion of components of the auxiliary processor 123 of FIG. 1. For example, the decoding processor 450 may include a hardware configuration such as a digital signal processor (DSP), an NPU, a GPU, or a CPU for low power. However, the embodiment of the present disclosure is not limited thereto. For example, the decoding processor 450 may be referred to as a low-power processor, an offloading processor, a decoding device, a low-power decoder, or a low-power offloader.

For example, the processor 400 may include various processing circuitry and/or a plurality of processors. For example, the term "processor" used in the present document, including in the claims, may include various processing circuitry including at least one processor, and one or more of the at least one processor may be configured to perform various functions described below individually and/or collectively in a distributed manner. As used below, in a case that "processor", "at least one processor", and "one or more processors" are described as configured to perform various functions, these terms are, for example, not limited thereto, and encompass situations in which one processor performs a portion of the cited functions, and situations in which another processor(s) performs another portion of the cited functions, and situations in which one processor may perform all of the cited functions. In addition, the at least one processor may include, for example, a combination of processors that perform the enumerated/described various functions in a distributed manner. The at least one processor may execute program instructions to achieve or perform the various functions.

According to an embodiment, the processor 400 may include a demuxer 405, a chunk configurator 410, a metadata generator 415, a playing manager 420, a transmission unit discriminator 425, and a frame header adder 430. For example, each of the demuxer 405, the chunk constructor 410, the metadata generator 415, the playing manager 420, the transmission unit discriminator 425, and the frame header adder 430 may be implemented as software inside the processor 400. In the example of FIG. 4, it is illustrated that the processor 400 includes the demuxer 405, the chunk constructor 410, the metadata generator 415, the playing manager 420, the transmission unit discriminator 425, and the frame header adder 430, but the embodiment of the present disclosure is not limited thereto. For example, the processor 400 may be implemented with one or more components that implement a function (or an operation) performed by each of the demuxer 405, the chunk constructor 410, the metadata generator 415, the playing manager 420, the transmission unit discriminator 425, and the frame header adder 430.

According to an embodiment, the processor 400 may include a decoder 435. For example, the processor 400 may include the decoder 435 implemented in hardware, software, or a combination of hardware and software. However, the embodiment of the present disclosure is not limited thereto. For example, the processor 400 may not include the decoder 435. For example, in a case that the electronic device 101 includes the decoding processor 450 including a decoder 455, the decoder 435 may not be included within the processor 400. Alternatively, even if the electronic device 101 includes the decoding processor 450, the processor 400 may further include the decoder 435 in order to increase a decoding performance.

Although not illustrated in FIG. 4, the electronic device 101 may further include components for outputting media. For example, the electronic device 101 may further include a speaker (e.g., the sound output module 155 of FIG. 1) for outputting (or providing) auditory information such as audio. For example, the electronic device 101 may further include a display (e.g., the display module 160 of FIG. 1) for outputting (or providing) visual information such as a video (or an image). For example, the electronic device 101 may further include a motor (e.g., the haptic module 179 of FIG. 1) for providing haptic feedback based on vibration. For example, the electronic device 101 may further include memory (e.g., the memory 130 of FIG. 1) that stores data of media. For example, the electronic device 101 may further include communication circuitry (e.g., the communication module 190 of FIG. 1) for obtaining (or receiving or downloading) data of media from an external electronic device (or a server).

According to an embodiment, the processor 400 may demux the data of the media using the demuxer 405. For example, in a case that the data includes both video and audio, the processor 400 may split the video and the audio from the data using the demuxer 405. For example, the processor 400 may transmit a request so that the metadata generator 415 and the chunk configurator 410 are executed as the data of the media is obtained using the demuxer 405. For example, the request may cause execution of the metadata generator 415 and the chunk constructor 410. However, an embodiment of the present disclosure is not limited thereto. For example, each of the metadata generator 415 and the chunk constructor 410 may be executed regardless of the request by the demuxer 405.

According to an embodiment, the processor 400 may recognize a configuration (or a configuration unit) of the data of the media using the demuxer 405. For example, the processor 400 may determine, using the demuxer 405, whether the data is configured as a plurality of frames or a plurality of frame sets. For example, each of the plurality of frame sets may include one or more frames.

According to an embodiment, the processor 400 may recognize a frame request transmitted from the playing manager 420 to the demuxer 405. For example, the frame request may indicate a frame next to a currently playing frame. Alternatively, for example, the frame request may indicate a frame set next to a currently playing frame set. Alternatively, for example, the frame request may indicate a seek-requested frame. Alternatively, for example, the frame request may indicate a frame set including the seek-requested frame. According to an embodiment, the frame request may include a size of a frame set that a decoder may support (or a supportable size, a maximum size). For example, as the processor 400 checks capability information of the decoder 435 within the processor 400 or receives capability information of the decoder 455 of the decoding processor 450, the processor 400 may recognize the maximum size of the frame set that the decoder may support. The processor 400 may include the maximum size in the frame request and then transmit the frame request to the demuxer 405.

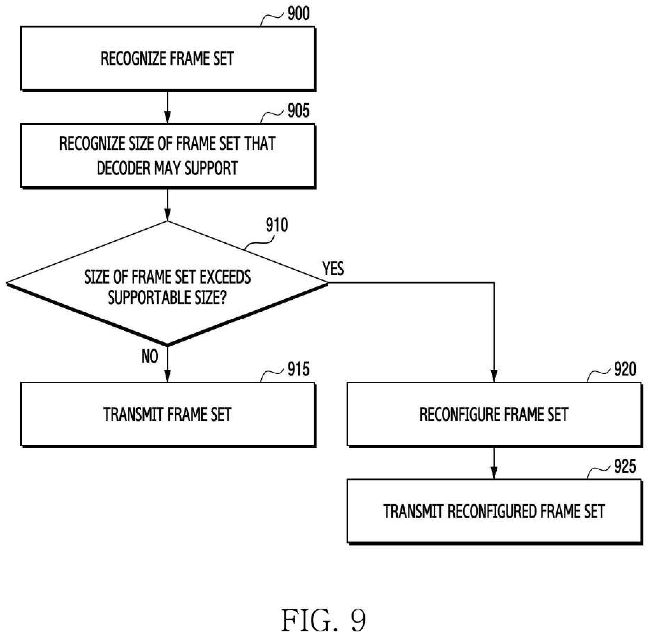

According to an embodiment, the processor 400 may configure a frame set using the chunk constructor 410. For example, the processor 400 may reconfigure, using the chunk configurator 410, the frame set including a plurality of frames (or configured as the plurality of frames) so that the frame set includes one or more frames among the plurality of frames. For example, in a case that a seek request is received and a frame indicated by the seek request is a frame different from an initial frame among the plurality of frames, the one or more frames may represent a remaining portion from which one or more other frames prior to a time value of the seek-requested frame among the plurality of frames, are removed. That is, the one or more other frames may represent a portion removed by the seek request among the plurality of frames, different from the one or more frames. The one or more other frames may be referred to as remove frames or skip frames. Alternatively, for example, in a case that the maximum size is recognized, the frame set may be reconfigured so that the one or more frames correspond to the maximum size. A specific example of an operation of recognizing the maximum size and reconfiguring will be described below in FIG. 9.

According to an embodiment, in a case that media is configured for each frame, the processor 400 may merge (or distinguish, configure, or distribute) a designated number of frames into one frame set. For example, even when the media is configured as frames, the processor 400 may configure the media into frame sets in order to reduce the number of decoding and reading. In this case, each of the frame sets may include the designated number of frames. For example, the designated number may be plural.

According to an embodiment, the processor 400 may generate frame configuration information for one or more frames in a frame set using the metadata generator 415. For example, the frame configuration information may include a time value (or a timestamp) indicating an initial frame among the one or more frames in the media, the number of the one or more frames, a time duration of each of the one or more frames, and a size of each of the one or more frames. For example, the frame set may be a reconfigured frame set. For example, the frame set may include the one or more frames among a plurality of frames. For example, the one or more frames may include a remaining portion in which one or more other frames are removed, from the plurality of frames.

For example, in a case that a seek request is received, the time value indicating the initial frame may represent a time value indicating a frame, indicated by the seek request, which is an initial frame among the one or more frames. For example, the number of the one or more frames may indicate the number of frames included in the reconfigured frame set. For example, the time duration of each of the one or more frames may represent a time length of each frame included in the reconfigured frame set. For example, the size of each of the one or more frames may include the number of bits (or bytes) of each frame included in the reconfigured frame set. For example, the time value and the time duration may be calculated based on at least one of a file format of the media (or a specification of the file format), a codec type by which the media is encoded, a bit rate, or a sampling rate of the media.

In the example, an example of generating the frame configuration information in a case that a frame set including a plurality of frames includes one or more frames as the frame set is reconfigured is described, but the embodiment of the present disclosure is not limited thereto. For example, the processor 400 may generate the frame configuration information for the plurality of frames included in the obtained frame set without reconfiguring the frame set, using the chunk configurator 410.

In the example, a case in which the frame configuration information includes the time value (or the timestamp) indicating the initial frame among the one or more frames in the media, the number of the one or more frames, the time duration of each of the one or more frames, and the size of each of the one or more frames is exemplified, but the present disclosure is not limited thereto. According to an embodiment, the frame configuration information may include at least one of the information of the example. For example, the frame configuration information may include the number of the one or more frames and the size of each of the one or more frames. In a case that the time value indicating the initial frame is obtained through other information and the time duration of the one or more frames are identical to each other, the frame configuration information may include information indicating the number and the size among the time value, the number, the time duration, and the size. Alternatively, for example, the frame configuration information may include information indicating the size among the time value, the number, the time duration, and the size.

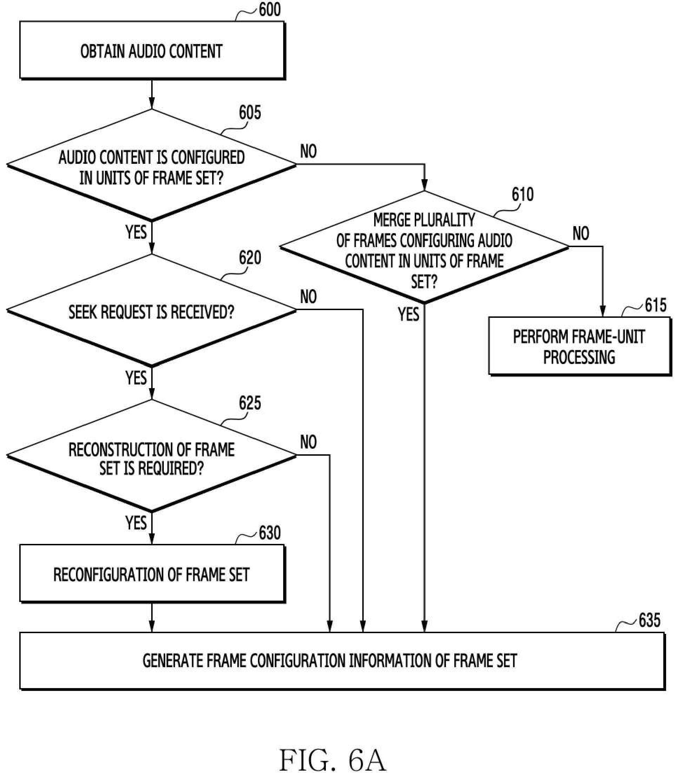

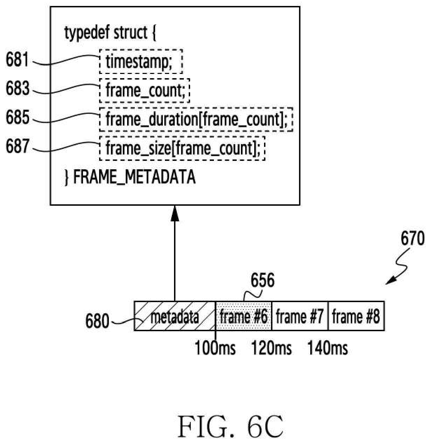

A specific example of a method of generating the frame configuration information will be described below in FIG. 6A. A specific example of the frame configuration information is described below in FIG. 6C.

According to an embodiment, the processor 400 may determine whether a seek request is received by using the playback manager 420. For example, the processor 400 may recognize the seek request based on an input to the electronic device 101, and may transmit the recognized seek request to the playing manager 420. In a case that the seek request is received, the processor 400 may transmit the frame request from the playing manager 420 to the demuxer 405. For example, the frame request may indicate a seek-requested frame (or a frame set including the seek-requested frame). Alternatively, for example, the processor 400 may transmit the frame request from the playing manager 420 to the demuxer 405. For example, the frame request may indicate a frame next to a current frame (or a frame set next to a current frame set).

For example, the processor 400 may transmit a request by using the playing manager 420 so that the transmission unit discriminator 425 and the frame header adder 430 are executed. For example, the request may cause execution of the transmission unit discriminator 425 and the frame header adder 430. However, the embodiment of the present disclosure is not limited thereto. For example, each of the transmission unit discriminator 425 and the frame header adder 430 may be executed regardless of the request by the playing manager 420.

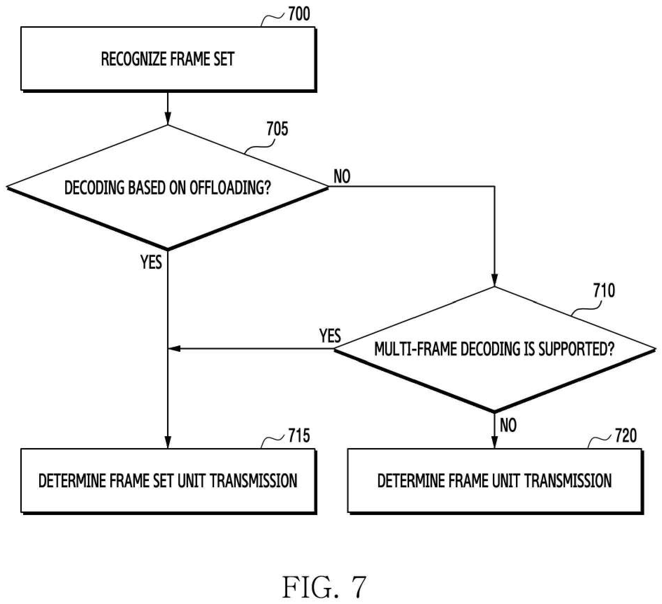

According to an embodiment, the processor 400 may determine a unit (hereinafter, referred to as a transmission unit) transmitted from the playing manager 420 to the decoder 435 or the decoder 455 using the transmission unit discriminator 425. For example, the processor 400 may determine the transmission unit determined according to a decoding method of the decoder 435 or a decoding method of the decoder 455. For example, the transmission unit may correspond to the decoding method of the decoder 435 or the decoding method of the decoder 455. For example, the decoding method may include decoding for each frame or decoding for each frame set. A specific example of a method of determining the transmission unit will be described below in FIG. 7.

According to an embodiment, the processor 400 may insert (or add) headers for each frame of a frame set using the frame header adder 430. For example, in a case that the frame set is reconfigured, the frame set may include one or more frames, and the frame header adder 430 may generate one or more headers corresponding to the one or more frames. For example, the number of the one or more headers may correspond to the number of the one or more frames. For example, the processor 400 may identify, using frame configuration information of the frame set, the number of the one or more frames and generate the one or more headers corresponding to the identified number. However, embodiments of the present disclosure are not limited thereto. For example, in a case that the frame set is not reconfigured, the frame set may include a plurality of frames, and the frame header adder 430 may generate a plurality of headers corresponding to the plurality of frames.

According to an embodiment, the processor 400 may insert a header required according to a codec type used in the decoder 435 or the decoder 455 and a header for each of frames of the frame set. For example, the codec type may include advanced audio coding (AAC), Opus, or MPEG layer 3 (MP3). However, the embodiments of the present disclosure are not limited thereto. For example, the codec type may further include other codec types. For example, in a case that the codec type is the AAC, the header may be an audio data transport stream (adts) header. The adts header may be used, in a case that the transmission unit is a frame set, to find a position of a frame next to a frame in which an error has occurred, considering a decoding error (e.g., frame corrupt). For example, the adts header may include a size for each frame of the frame configuration information. For example, in a case that the codec is the Opus, the header may be an Opus header. The Opus header may be used to distinguish positions of frames in the frame set in a case that the transmission unit is the frame set. For example, the Opus header may include a size for each frame of the frame configuration information. For example, in a case that the codec is the MP3, the header may not be inserted. For example, the Opus header may have a size of 4 bytes. In a case of the MP3, since the position of the frame may be identified through a sync word, a separate header may not be added (or inserted).

For example, the processor 400 may reconfigure (or generate) the frame set by inserting a header for each of the frames in the frame set. For example, the processor 400 may recognize positions (or times) of the frames in the frame set using the frame configuration information of the frame set, and reconfigure (or generate) the frame set including the header for each of the frames. For example, the header may be concatenated with a corresponding frame.

According to an embodiment, the processor 400 may generate information (hereinafter, header indication information) for indicating the header added according to the codec type using the frame header adder 430. For example, the information may represent information indicating that the frame set includes the adts header or the Opus header. For example, the frame set transmitted to the decoder 435 or the decoder 455 may further include the information.

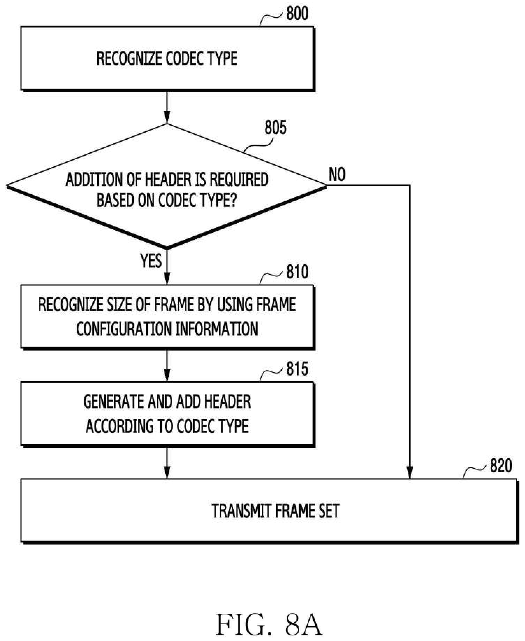

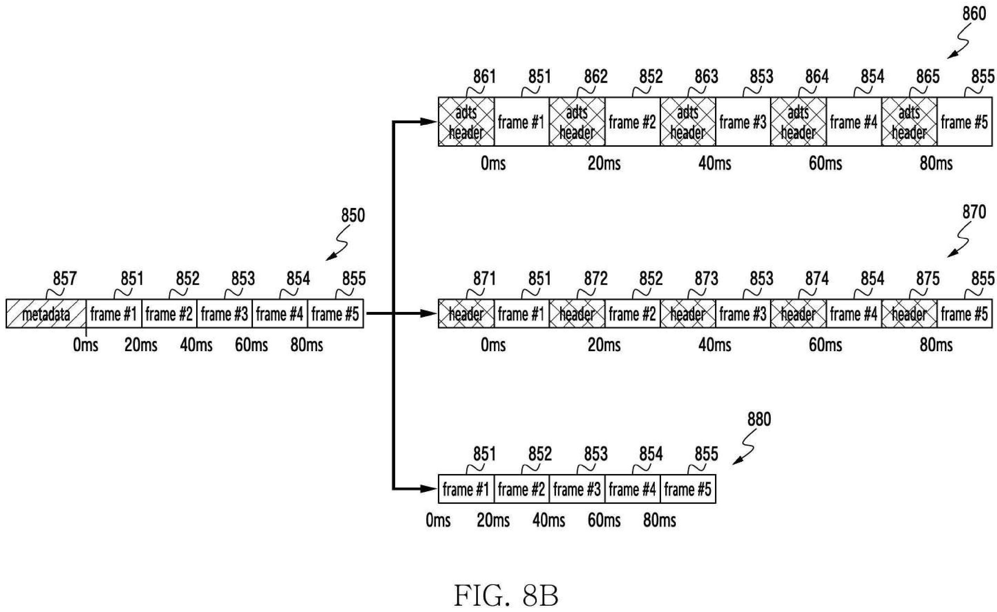

A specific example of a method of generating and inserting a header will be described below in FIG. 8A. A specific example of a frame set into which a header is inserted will be described in FIG. 8B.

According to an embodiment, the processor 400 may performing decoding of the obtained frame set (or frame) by using the decoder 435 in the processor 400. For example, the frame set may represent a frame set in which the frame configuration information is reconfigured, or a header is inserted using the frame configuration information. According to an embodiment, the processor 400 may output a decoded frame set. For example, the processor 400 may output (or play) the decoded frame set by controlling the output device (e.g., the speaker).

Alternatively, according to an embodiment, the processor 400 may cause the decoder 455 outside the processor 400 to perform decoding of the obtained frame set (or frame). For example, the frame set may represent a frame set in which the frame configuration information is reconfigured, or a header is inserted using the frame configuration information. For example, the processor 400 may transmit the frame set to the decoding processor 450. The decoding processor 450 may perform decoding of the received frame set. According to an embodiment, the decoding processor 450 may output a decoded frame set. For example, the decoding processor 450 may output (or play) the decoded frame set by controlling the output device (e.g., the speaker).

In the example of FIG. 4, an example in which the electronic device 101 includes the processor 400 and the decoding processor 450 is illustrated, but the embodiment of the present disclosure is not limited thereto. For example, the electronic device 101 may include the processor 400, and the external electronic device (e.g., the electronic device 102 of FIG. 1) may include the decoding processor 450. Accordingly, the electronic device 101 may transmit the frame set reconfigured using the frame configuration information or into which the header is inserted, to the external electronic device, and the external electronic device may perform decoding of the frame set. Thereafter, the external electronic device may output the decoded frame set using a sound output device of the external electronic device. For example, the external electronic devices may include a true wireless stereo (TWS) or extended reality (XR) device (e.g., HMD). However, the embodiment of the present disclosure is not limited thereto.

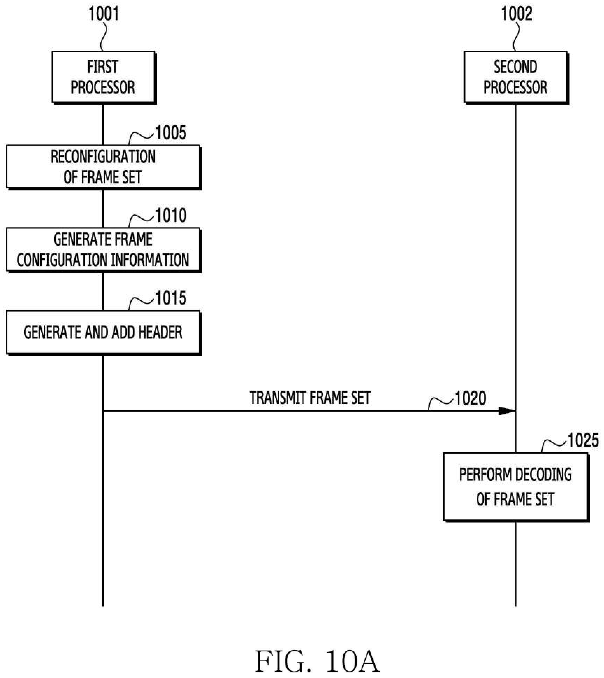

In addition, in the example of FIG. 4, an example is illustrated in which the processor 400 performs operations of generating the frame configuration information, reconfiguring the frame set, and inserting the header, but the embodiment of the present disclosure is not limited thereto. For example, a plurality of processors may perform the operations by dividing them. Specific examples related to this will be described below in FIGS. 10A to 10C.

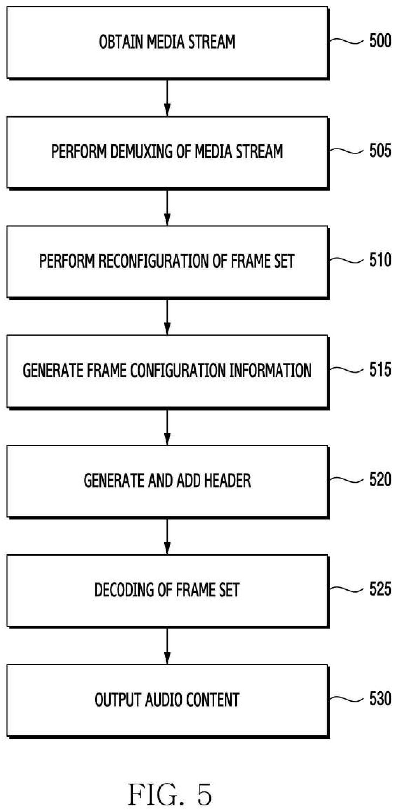

FIG. 5 illustrates an example of an operation flow for a method in which an electronic device outputs a media stream using configuration information of a frame, according to an embodiment.

The method of FIG. 5 may be performed by the electronic device 101 of FIG. 4. For example, operations of the method may be controlled by the processor 400 of the electronic device 101. For example, at least a portion of the operations of the method may be controlled by the processor 400, and another at least a portion of the operations may be controlled by a decoding processor 450. In the following embodiment, each operation may be sequentially performed, but is not necessarily performed sequentially. For example, an order of each operation may be changed, and at least two operations may be performed in parallel.

According to an embodiment, in operation 500, the electronic device 101 may obtain a media stream. For example, the electronic device 101 may obtain the media stream, which is data of a media to be played. For example, the media may include audio. In a case that the media includes the audio, the media stream may include an audio content (or audio file, audio stream, audio data, audio information). Alternatively, for example, the media may include audio and a video. When the media includes the audio and the video, the media stream may include an audio content and a video content (or video file, video stream, video data, video information).

According to an embodiment, the electronic device 101 may read the media stream stored in memory (e.g., the memory 130 of FIG. 1) of the electronic device 101 or obtain (or receive) the media stream from an external electronic device (or a server) through communication circuitry (e.g., the communication module 190 of FIG. 1) of the electronic device 101.

According to an embodiment, in operation 505, the electronic device 101 may perform demuxing of the media stream. For example, the electronic device 101 may perform the demuxing to distinguish (or split) data included in the media stream. For example, in a case that the media stream includes an audio content and a video content, by performing the demuxing, the audio content and the video content may be distinguished (or split). Alternatively, in a case that the media stream includes an audio content, a plurality of components (e.g., streams) configuring the audio content may be distinguished (or split). Hereinafter, for convenience of explanation, an example in which the media stream includes an audio content is illustrated, but embodiments of the present disclosure are not limited thereto.

According to an embodiment, the electronic device 101 may determine a component unit of the audio content based on the demuxing. For example, the electronic device 101 may check whether the audio content is configured in units of a frame or a frame set. The audio content being configured in the units of a frame may represent that the audio content is configured as a plurality of frames. The audio content being configured in the units of a frame set may represent that the audio content is configured as a plurality of frame sets, and each of the plurality of frame sets includes the plurality of frames.

According to an embodiment, in operation 510, the electronic device 101 may perform reconfiguration of a frame set. For example, the electronic device 101 may reconfigure the frame set, which includes (or is configured as) the plurality of frames, to include one or more frames among the plurality of frames.

For example, the electronic device 101 may perform reconfiguration of the frame set in a case that the seek request is received, and the frame indicated by the seek request is not an initial frame among the plurality of frames. For example, in a case that the seek request is received, the electronic device 101 may obtain a time value of the frame indicated by the seek request. In a case that the frame having the time value is different from the initial frame among the plurality of frames in the frame set, the electronic device 101 may remove one or more other frames prior to the time value of the frame among the plurality of frames. Accordingly, the electronic device 101 may identify the one or more frames including a remaining portion from which the one or more other frames are removed among the plurality of frames. For example, the remaining portion may include the frame. The electronic device 101 may reconfigure the frame set to include the one or more frames, which are the remaining portion.

In the example, a case in which the frame set is reconfigured to include the one or more frames changed from the plurality of frames is described, but an embodiment of the present disclosure is not limited thereto. For example, the frame set may include the one or more frames including the plurality of frames. In other words, in a case that the seek request is not received, causing the next frame set to be requested, or in a case that the seek request is received but the frame indicated by the seek request is the initial frame in the frame set, the electronic device 101 may not reconfigure the frame set. Accordingly, the electronic device 101 may identify the one or more frames including (or corresponding to) the plurality of frames configuring the frame set.

According to an embodiment, in operation 515, the electronic device 101 may generate frame configuration information. For example, the electronic device 101 may generate the frame configuration information of the frame set including the identified one or more frames. For example, the identified one or more frames may correspond to the plurality of frames or include the remaining portion among the plurality of frames. For example, the frame configuration information may be referred to as metadata or configuration information.

For example, the frame configuration information may include a time value (or a timestamp) indicating an initial frame among the one or more frames in the audio content, the number of the one or more frames, a time duration of each of the one or more frames, and a size of each of the one or more frames. For example, the frame set may be a reconfigured frame set. For example, the frame set may include the one or more frames among the plurality of frames. In the example, a case in which the frame configuration information includes the time value (or the timestamp) indicating the initial frame among the one or more frames in the media, the number of the one or more frames, the time duration of each of the one or more frames, and the size of each of the one or more frames is illustrated, but the present disclosure is not limited thereto. According to an embodiment, the frame configuration information may include at least one of the information of the example. For example, the frame configuration information may include the number of the one or more frames and the size of each of the one or more frames. In a case that the time value indicating the initial frame is obtained through other information and the time duration of the one or more frames are identical to each other, the frame configuration information may include information indicating the number and the size among the time value, the number, the time duration, and the size.

For example, in a case that a seek request is received, the time value indicating the initial frame may represent a time value indicating a frame, indicated by the seek request, which is the initial frame among the one or more frames in the audio content. For example, in a case that the audio content has a running time of 10 minutes, the time value indicating the initial frame of the frame configuration information may represent a time value (e.g., 3 minutes) indicating the frame indicated by the seek request from a time value (e.g., 0 ms) of the initial frame among the frames configuring the audio content.

For example, the number of the one or more frames may indicate the number of frames included in the reconfigured frame set. For example, the time duration of each of the one or more frames may represent a time length of each frame included in the reconfigured frame set. For example, the size of each of the one or more frames may include the number of bits (or bytes) of each frame included in the reconfigured frame set. For example, the time value and the time duration may be calculated based on at least one of a file format (or a specification of the file format) of the audio content, a codec type in which the audio content is encoded, a bit rate, or a sampling rate of the audio content.

In the example, an example of generating the frame configuration information in a case that the frame set including the plurality of frames includes the one or more frames as the frame set is reconfigured is described, but the embodiment of the present disclosure is not limited thereto. For example, the processor 400 may generate the frame configuration information for the plurality of frames included in the obtained frame set without reconfiguring the frame set.

According to an embodiment, the electronic device 101 may insert the generated frame configuration information into the frame set. For example, in a case that the reconfiguration is performed, the electronic device 101 may insert the frame configuration information into the frame set including the one or more frames. Alternatively, for example, in a case that reconstruction is not performed, the electronic device 101 may insert the frame configuration information into the frame set including the plurality of frames. In other words, the electronic device 101 may generate the frame set including the frame configuration information.

A specific content of a method of generating frame configuration information and inserting the frame configuration information into a frame set as described above will be described below in FIGS. 6A to 6C.

In addition, in FIG. 5, an example of reconfiguring the frame set and generating the frame configuration information is illustrated, but the embodiment of the present disclosure is not limited thereto. The electronic device 101 may generate frame configuration information of a frame set including a plurality of frames before being reconfigured, and may reconfigure the frame set to include one or more frames among the plurality of frames using the frame configuration information. For example, after generating the frame configuration information of the frame set including the plurality of frames, as a seek request is received using the frame configuration information, the electronic device 101 may determine whether a frame indicated by the seek request is an initial frame. The electronic device 101 may reconfigure the frame set to include one or more frames by removing a portion among the plurality of frames according to a result of the determination. For example, in a case that the result of the decision indicates that the frame is not the initial frame, the electronic device 101 may remove the portion including a frame having a time value prior to the frame among the plurality of frames.

According to an embodiment, the electronic device 101 may determine a transmission unit of the audio content to be transmitted to a decoder. For example, the decoder may be included in the processor 400 of the electronic device 101, or may be included in another processor (e.g., the decoding processor 450 of FIG. 4) outside the processor 400 of the electronic device 101. Alternatively, for example, the decoder may be a decoder of an external electronic device (e.g., TWS, or HMD) that is connected to the electronic device 101 and is for outputting audio.

For example, in a case that a decoder (e.g., the decoder 435 of FIG. 4) in the processor 400 of the electronic device 101 supports multi-frame decoding, or a decoder (e.g., the decoder 455 of FIG. 4) of the decoding processor 450 of the electronic device 101 is used (or an offloading technique is used), or the decoder of the external electronic device is used (or an offloading technique is used), the transmission unit may be determined in units of a frame set. In contrast, in a case that the offloading technique is not used and the decoder in the processor 400 of the electronic device 101 does not support the multi-frame decoding, the transmission unit may be determined in units of a frame. A specific content of the method of determining the transmission unit will be described in FIG. 7.

According to an embodiment, the electronic device 101 may recognize a codec type. For example, in a case that the transmission unit is a frame set unit, the electronic device 101 may recognize the codec type to be used for decoding the frame set. For example, the electronic device 101 may recognize the codec type of the obtained data of the media. Alternatively, for example, the electronic device 101 may recognize the codec type of the decoder (e.g., the decoder 435 or the decoder 455) that may perform decoding of the data of the media.

For example, the electronic device 101 may determine whether a header is required based on the recognized codec type. For example, in a case that the codec type is MP3, since a position of each frame in the frame set may be identified through a sync word, addition of the header may not be required. In contrast, in a case that the codec type is an AAC codec or Opus, since the position of each frame in the frame set may be identified without additional information, the addition of the header may be required.

According to an embodiment, in operation 520, the electronic device 101 may generate and add a header. For example, in a case of determining that the addition of the header is required, the electronic device 101 may generate a header according to the codec type using the frame configuration information.

For example, in a case that the frame set is reconfigured in the operation 510, the electronic device 101 may generate one or more headers corresponding to the one or more frames of the frame set using the frame configuration information. The electronic device 101 may generate the one or more headers having the number corresponding to the number of the one or more frames in the frame configuration information. For example, each of the one or more headers may include a size of each of the one or more frames in the frame configuration information. According to an embodiment, in a case of determining that the generation (or addition) of the one or more headers is required, the electronic device 101 may obtain audio information of the frame set. For example, the audio information may include a sampling rate, the number of channels, or a size of the frame set. For example, the audio information may be obtained from the demuxer 405 of FIG. 4.

Alternatively, for example, in a case that the frame set is not reconfigured, the electronic device 101 may generate a plurality of headers corresponding to the plurality of frames of the frame set using the frame configuration information. The electronic device 101 may generate the plurality of headers having the number corresponding to the number of the plurality of frames in the frame configuration information. For example, each of the plurality of headers may include a size of each of the plurality of frames in the frame configuration information.

According to an embodiment, the electronic device 101 may generate a header and then add the header in the frame set. For example, the electronic device 101 may add the header in the frame set to be concatenated to a frame corresponding to the header.

For example, in a case that the electronic device 101 generates one or more headers corresponding to the one or more frames, the electronic device 101 may add each of the one or more headers in the frame set so as to be concatenated for each of the one or more corresponding frames.

Alternatively, for example, in a case that the electronic device 101 generates the plurality of headers corresponding to the plurality of frames, the electronic device 101 may add each of the plurality of headers in the frame set so as to be concatenated for each of the plurality of frames.

According to an embodiment, the electronic device 101 may generate header indication information added according to the codec type. For example, the header indication information may represent information indicating that the frame set includes the adts header or the Opus header. For example, the frame set to be transmitted to the decoder may further include the header indication information along with the header.

As described above, in a case that the codec type is the MP3, since the generation of the header is not required, the operation 520 may be omitted. A specific content of recognizing the codec time and generating and adding a header according to the codec type will be described below with reference to FIGS. 8A to 8C.

According to an embodiment, in operation 525, the electronic device 101 may perform decoding of the frame set.

For example, in a case that the electronic device 101 uses the decoder (e.g., the decoder 435 of FIG. 4) in the processor 400 of the electronic device 101 for the decoding, the electronic device 101 may transmit the frame set in which the header is added for each frame to the decoder (e.g., the decoder 435 of FIG. 4) in the processor 400, and perform the decoding of the frame set through the decoder (e.g., the decoder 435 of FIG. 4) in the processor 400.

Alternatively, for example, in a case that the electronic device 101 uses a decoder (e.g., the decoder 455 of FIG. 4) outside the processor 400, the electronic device 101 may transmit the frame set in which the header is added for each frame to the decoder (e.g., the decoder 455 of FIG. 4) in the decoding processor 450, and perform the decoding of the frame set through the decoder (e.g., the decoder 455 of FIG. 4) in the decoding processor 450.

Alternatively, according to an embodiment, in a case that the electronic device 101 uses the decoder of the external electronic device, the electronic device 101 may transmit the frame set in which the header is added for each frame to the external electronic device. For example, the electronic device 101 may cause decoding of the frame set by transmitting the frame set in which the header is added to the external electronic device.

According to an embodiment, in operation 530, the electronic device 101 may output the audio content. For example, the electronic device 101 may output (or play) the audio content for the decoded frame set.

For example, in a case the decoding is performed using the decoder (e.g., the decoder 435 of FIG. 4) in the processor 400, the electronic device 101 may output the audio content for the decoded frame set through a sound output device of the electronic device 101.

Alternatively, for example, in a case that decoding is performed using the decoder (e.g., the decoder 455 of FIG. 4) in the decoding processor 450, the electronic device 101 may output the audio content for the decoded frame set through the sound output device of the electronic device 101.

Alternatively, for example, in a case that decoding is performed in the electronic device 101, the electronic device 101 may transmit the decoded frame set to an external electronic device (e.g., TWS, or HMD) for sound output, causing the external electronic device to output the audio content for the frame set.

Alternatively, according to an embodiment, in a case that decoding is performed in the external electronic device, the audio content for the frame set may be output through the sound output device of the external electronic device.

In the example of FIG. 5, reconfiguration of one frame set, generation of frame configuration information of one frame set, generation and addition of a header for one frame set, performance of decoding for one frame set, and output of an audio content for one frame set are exemplified, but embodiments of the present disclosure are not limited thereto. For example, the electronic device 101 may perform the operations of FIG. 5 for each of a plurality of frame sets configuring the audio content. At this time, at least a portion (e.g., decoding and output (or play) using the external electronic device) among the operations of FIG. 5 may be caused by the electronic device 101 and performed by the external electronic device.

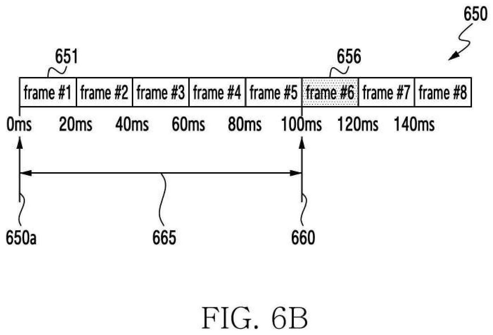

FIG. 6A illustrates an example of an operation flow for a method in which an electronic device generates configuration information of a frame, according to an embodiment. FIG. 6B illustrates an example of a frame set including a frame indicated according to a seek request, according to an embodiment. FIG. 6C illustrates an example of a frame set including configuration information of a frame, according to an embodiment.

The method of FIG. 6A may be performed by the electronic device 101 of FIG. 4. For example, operations of the method may be controlled by the processor 400 of the electronic device 101. Alternatively, for example, the operations of the method may be controlled by a plurality of processors that divide and perform functions of the processor 400. In the following embodiment, each operation may be sequentially performed, but is not necessarily performed sequentially. For example, an order of each operation may be changed, and at least two operations may be performed in parallel. The method of FIG. 6A may represent a specific example of the operation 500 to the operation 515 of FIG. 5.

According to an embodiment, in operation 600, the electronic device 101 may obtain an audio content. For example, the electronic device 101 may read the media stream stored in memory (e.g., the memory 130 of FIG. 1) of the electronic device 101 or obtain (or receive) the media stream from an external electronic device (or a server) through communication circuitry (e.g., the communication module 190 of FIG. 1) of the electronic device 101.

According to an embodiment, in operation 605, the electronic device 101 may determine whether the audio content is configured in units of a frame set. For example, the electronic device 101 may check whether the audio content is configured in the units of a frame or is configured in units of a frame set. The audio content being configured in the units of a frame may represent that the audio content is configured as a plurality of frames. The audio content being configured in the units of a frame set may represent that the audio content is configured as a plurality of frame sets, and each of the plurality of frame sets includes the plurality of frames.

In the operation 605, in a case that the audio content is configured in the units of a frame set, the electronic device 101 may perform operation 620. Alternatively, in the operation 605, in a case that the audio content is configured in the units of a frame, the electronic device 101 may perform operation 610.

According to an embodiment, in the operation 610, the electronic device 101 may determine whether to merge a plurality of frames in the units of a frame set. For example, in a case that the audio content is configured in the units of a frame, the electronic device 101 may determine whether to merge (or configure, distinguish, or distribute) the plurality of frames configuring the audio content into a plurality of frame sets. For example, each of the plurality of frame sets may include a designated number of frames. For example, in a case that the plurality of frames configuring the audio content are 1000, and the designated number is 8, the plurality of frames may be distributed into 125 frame sets. The example is only for convenience of explanation, and the embodiments of the present disclosure are not limited thereto.

Referring to the above, even when the audio content is configured in the units of a frame, the electronic device 101 may distinguish the audio content in the units of a frame set, in order to reduce processing complexity within the electronic device 101 and reduce power consumption by reducing the number of accesses (e.g., the number of reads).

In the operation 610, in a case that the plurality of frames configuring the audio content are distinguished in the units of a frame set, the electronic device 101 may perform operation 635. Alternatively, in the operation 610, in a case that the plurality of frames configuring the audio content are not distinguished in the units of a frame set, the electronic device 101 may perform operation 615.

According to an embodiment, in the operation 615, the electronic device 101 may perform frame-unit processing. For example, in a case that the electronic device 101 does not distinguish the plurality of frames configuring the audio content in the units of a frame set, the electronic device 101 may perform processing (e.g., reading for a frame, transmission for the frame, decoding for the frame, and outputting (or playing) for the frame) for each of the plurality of frames. In other words, the electronic device 101 may refrain from (or skip) generating frame configuration information for the plurality of frames configuring the audio content.

According to an embodiment, in the operation 620, the electronic device 101 may determine whether a seek request is received. For example, the electronic device 101 may obtain a user input for the seek request for the audio content. For example, the input may include a touch input, a gesture, or a voice for an area of a display of the electronic device 101. For example, as the input is obtained, the electronic device 101 may receive (or recognize or identify) the seek request.

In the operation 620, in a case that the seek request is received, the electronic device 101 may perform operation 625. Alternatively, in the operation 620, in a case that the seek request is not received, the electronic device 101 may perform the operation 635.

According to an embodiment, in the operation 625, the electronic device 101 may determine whether reconstruction of the frame set is required. For example, in a case that the seek request is received, the electronic device 101 may obtain a time value of a frame indicated by the seek request. The frame indicated by the seek request may be included in the frame set configured as a plurality of frames. The number of the plurality of frames in the frame set may correspond to the designated number. For example, the electronic device 101 may determine whether the time value of the frame is an initial frame among the plurality of frames in the frame set. For a method of comparing the time value of the frame with the initial frame, FIG. 6B may be referred to.

Referring to FIG. 6B, a frame set 650 may be configured as the designated number (e.g., 8) of frames (e.g., frame #1, frame #2, frame #3, frame #4, frame #5, frame #6, frame #7, and frame #8). For example, each frame in the frame set 650 may have a time duration of 20 ms. For example, when a frame 656 is indicated by the seek request, the electronic device 101 may obtain a time value 660 of the frame 656. For example, the electronic device 101 may compare the time value 660 with a time value 650a of an initial frame 651 in the frame set 650. In this case, the time value 650a of the initial frame 651 may also be referred to as a time value of the frame set 650. As in the example of FIG. 6B, in a case that the time value 660 is different from the time value 650a, the electronic device 101 may determine that reconfiguration of the frame set 650 is required. Unlike the example of FIG. 6B, in a case that the time value 660 and the time value 650a are identical (or correspond), the electronic device 101 may determine that the reconfiguration of the frame set 650 is not required.

Referring back to FIG. 6A, in the operation 625, in a case that the reconfiguration of the frame set is required, the electronic device 101 may perform operation 630. Alternatively, in the operation 625, in a case that the reconfiguration of the frame set is not required, the electronic device 101 may perform the operation 635.

According to an embodiment, in the operation 630, the electronic device 101 may reconfigure the frame set. For example, in a case that the frame indicated by the seek request is different from the initial frame among the plurality of frames configuring the frame set, the electronic device 101 may reconfigure the frame set. For example, the electronic device 101 may reconfigure the frame set to include one or more frames among the plurality of frames. For example, the one or more frames may include a remaining portion from which one or more other frames prior to a time value of the seek-requested frame among the plurality of frames, are removed. The one or more other frames may represent a portion removed by the seem request among the plurality of frames. For a method of reconfiguring the frame set to include the one or more frames, FIG. 6B may be referred to again.

Referring to FIG. 6B, in a case that the electronic device 101 determines that the reconfiguration of the frame set 650 is required, the electronic device 101 may reconfigure the frame set 650 to include one or more frames including the frame 656 indicated by the seek request. For example, the one or more frames may include frames (e.g., frame #6, frame #7, and frame #8) subsequent to the time value 660 of the frame 656. For example, in order to reconfigure the frame set 650, the electronic device 101 may remove (or skip) a portion of the frame set 650. For example, the portion may remove one or more other frames (e.g., frame #1, frame #2, frame #3, frame #4, and frame #5) prior to the time value 660, among the plurality of frames in the frame set 650. For example, the one or more other frames may represent frames of time durations 665 prior to the time value 660 or between the time value 660 and the time value 650a.

Referring back to FIG. 6A, according to an embodiment, in the operation 635, the electronic device 101 may generate frame configuration information of the frame set. For example, above frame configuration information of the frame set may include a time value (or a timestamp) indicating an initial frame among the one or more frames in the audio content, the number of the one or more frames, a time duration of each of the one or more frames, and a size of each of the one or more frames. The frame configuration information of the frame set may be referred to as frame configuration information for the one or more frames in the frame set.

In the example, a case in which the frame configuration information includes the time value (or the timestamp) indicating the initial frame among the one or more frames in the media, the number of the one or more frames, the time duration of each of the one or more frames, and the size of each of the one or more frames is exemplified, but the present disclosure is not limited thereto. According to an embodiment, the frame configuration information may include at least one of the information of the example. For example, the frame configuration information may include the number of the one or more frames and the size of each of the one or more frames. In a case that the time value indicating the initial frame is obtained through other information and the time duration of the one or more frames are identical to each other, the frame configuration information may include information indicating the number and the size among the time value, the number, the time duration, and the size.

For example, in a case that a seek request is received, the time value indicating the initial frame may represent a time value indicating a frame, indicated by the seek request, which is an initial frame among the one or more frames. For example, the number of the one or more frames may indicate the number of frames included in the reconfigured frame set. For example, the time duration of each of the one or more frames may represent a time length of each frame included in the reconfigured frame set. For example, the size of each of the one or more frames may include the number of bits (or bytes) of each frame included in the reconfigured frame set. For example, the time value and the time duration may be calculated based on at least one of a file format of the media (or a specification of the file format), a codec type by which the media is encoded, a bit rate, or a sampling rate of the media.

According to an embodiment, the one or more frames in the frame set may include the plurality of frames having the designated number configuring the frame set. For example, in a case that the plurality of frames configuring the audio content are distinguished in units of a frame set in the operation 610, the electronic device 101 may identify the one or more frames including the plurality of frames having the designated number. Alternatively, for example, in a case that the seek request is not received in the operation 620, the electronic device 101 may identify the one or more frames including the plurality of frames having the designated number. Alternatively, for example, in a case that it is determined that reconfiguration of the frame set is not required in the operation 625, the electronic device 101 may identify the one or more frames including the plurality of frames having the designate number.

According to an embodiment, the one or more frames in the frame set may include a portion of the plurality of frames having the designated number configuring the frame set. For example, if it is determined that the reconfiguration of the frame set is required in the operation 625, the electronic device 101 may remove one or more other frames from the plurality of frames having the designated number. The one or more frames may represent a remaining portion of the plurality of frames from which the one or more other frames are removed. For example, the initial frame of the one or more frames may be a frame indicated by the seek request.

For an example of the frame configuration information for the frame set including the one or more frames, FIG. 6C may be referred to.

Referring to FIG. 6C, a frame set 670 may represent a frame set reconstructed from the frame set 650 of FIG. 6B. For example, the frame set 670 may include one or more frames (e.g., frame #6, frame #7, and frame #8) including the frame 656 indicated by the seek request. For example, the frame set 670 may represent a frame set from which one or more other frames (e.g., frame #1, frame #2, frame #3, frame #4, and frame #5) prior to the frame 656 are removed from the plurality of frames (e.g., frame #1, frame #2, frame #3, frame #4, frame #5, frame #6, frame #7 and frame #8) of the frame set 650 having the designated number (e.g., 8).

For example, the frame set 670 may include frame configuration information 680 (or metadata). For example, the frame configuration information 680 of the frame set 670 may include information for the one or more frames. For example, the frame configuration information 680 may include a time value 681 (or a timestamp) indicating the initial frame (e.g., the frame 656) of the one or more frames. In the example of FIG. 6C, the time value 681 may be 100 ms. For example, the frame configuration information 680 may include a number 683 (frame_count) of the one or more frames. In the example of FIG. 6C, the number 683 may be 3. For example, the frame configuration information 680 may include a time duration 685 (frame_duration [frame_count]) of each of the one or more frames. For example, the time duration 685 may be configured in an array form according to the number 683. In the example of FIG. 6C, the time duration 685 may be [20 ms, 20 ms, 20 ms]. In the example, a case in which time durations for each frame are identical is illustrated, but the embodiment of the present disclosure is not limited thereto. For example, the time durations for each frame may be different. In addition, for example, the time duration 685 may include one time duration value. For example, in a case that time durations ofc each of the one or more frames according to the number 683 are identical (or only a case of having one time duration value), the time duration 685 may include the one time duration value for the one or more frames. In a case that the time duration 685 has the one time duration value for the number 683, which is plural, each of the one or more frames according to the number 683 may be understood to have the same time duration value. In other words, the time duration 685 may be configured in the array form or one value, in which the maximum size of the array corresponds to the number 683.For example, the frame configuration information 680 may include a size 687 (frame_size [frame_count]) of each of the one or more frames. For example, the size 687 may be configured in the array form according to the number 683 for example. For example, the size 687 may indicate a bit size (or a byte size) of each frame.

For example, the time value 681 may be included in the frame configuration information 680 in a data format of int64. For example, the number 683 may be included in the frame configuration information 680 in a data format of uint32. For example, the time duration 685 may be included in the frame configuration information 680 in a data format of int64. For example, the size 687 may be included in the frame configuration information 680 in a data format of uint32.

In the example of FIG. 6C, a case in which the frame configuration information 680 includes the time value 681 indicating the initial frame among the one or more frames in the media, the number 683 of the one or more frames, the time duration 685 of each of the one or more frames, and the size 687 of each of the one or more frames is illustrated, but the present disclosure is not limited thereto. According to an embodiment, the frame configuration information 680 may include at least one of the information of the example. For example, the frame configuration information 680 may include the number 683 of the one or more frames and the size 687 of each of the one or more frames. In a case that the time value 681 indicating the initial frame is obtained through other information and the time durations 685 of each of the one or more frames are identical, the frame configuration information 680 may include information indicating the number 683 and the size 687 among the time value 681, the number 683, the time duration 685, and the size 687. Alternatively, for example, the frame configuration information 680 may include information indicating the size 687 among the time value 681, the number 683, the time duration 685, and the size 687.

In addition, in FIG. 6A, an example in which a frame set is reconfigured and frame configuration information is generated is illustrated, but the embodiment of the present disclosure is not limited thereto. The electronic device 101 may generate frame configuration information of a frame set including a plurality of frames having a designated number before being reconfigured, and may reconfigure the frame set to include one or more frames among the plurality of frames by using the frame configuration information. For example, after generating the frame configuration information of the frame set including the plurality of frames, the electronic device 101 may determine, as a seek request is received by using the frame configuration information, whether a frame indicated according to the seek request is the initial frame. The electronic device 101 may reconfigure the frame set to include the one or more frames by removing the one or more other frames among the plurality of frames according to a result of the determination.

With reference to FIGS. 6A to 6C, it is assumed that the electronic device 101 is performing playing for a first frame set among a plurality of frame sets configuring the audio content.

For example, in a case that the seek request is not received, the electronic device 101 may recognize a second frame set subsequent to the first frame set and may generate frame configuration information of the second frame set. The second frame set may be a frame set continuous with the first frame set.

In contrast, in a case that the seek request is received, the electronic device 101 may recognize a third frame set different from the first frame set and may determine whether reconfiguration for the third frame set is required. For example, the third frame set may include a frame indicated by the seek request. Thereafter, in a case that reconfiguration for the third frame set is required, the electronic device 101 may perform reconfiguration and may generate frame configuration information of the reconfigured third frame set. Alternatively, in a case that reconfiguration for the third frame set is not required, the electronic device 101 may generate frame configuration information of the third frame set. The reconfigured third frame set may include a smaller number of frames than the third frame set before the reconfiguration (or the third frame set that is not reconfigured).

In the example, a case in which the third frame set and the first frame set are different is described, but the embodiment of the present disclosure is not limited thereto. For example, in a case that a frame indicated by the seek request is included in the first frame set, the electronic device 101 may identify the first frame set, may determine whether reconfiguration for the first frame set is required, and may generate frame configuration information.

In the example, it is assumed that the electronic device 101 is playing the first frame set, but the embodiments of the present disclosure are not limited thereto. For example, embodiments of the present disclosure may be applied even to a case in which the electronic device 101 does not play the media content.

FIG. 7 illustrates an example of an operation flow for a method of determining a unit of media to be transmitted to a decoder, according to an embodiment.

The method of FIG. 7 may be performed by the electronic device 101 of FIG. 4. For example, operations of the method may be controlled by the processor 400 of the electronic device 101. Alternatively, for example, the operations of the method may be controlled by a plurality of processors that divide and perform functions of the processor 400. In the following embodiment, each operation may be sequentially performed, but is not necessarily performed sequentially. For example, an order of each operation may be changed, and at least two operations may be performed in parallel. The method of FIG. 7 may be performed between the operation 515 and the operation 520 of FIG. 5.

According to an embodiment, in operation 700, the electronic device 101 may recognize a frame set. For example, the electronic device 101 may read the frame set including frame configuration information. For example, the frame set may include one or more frames and the frame configuration information for the one or more frames. For example, the one or more frames may include a plurality of frames having a designated number, or may include a remaining portion from which one or more other frames among the plurality of frames are removed according to reconfiguration of the frame set.

According to one embodiment, in operation 705, the electronic device 101 may determine whether decoding based on offloading is performed. For example, the electronic device 101 may determine whether the decoding based on the offloading is performed for the recognized frame set. For example, the decoding based on the offloading may be performed by a decoding processor 450 different from the processor 400 of the electronic device 101, or may be performed by an external electronic device (e.g., TWS, or HMD) connected to the electronic device 101.

In a case that the decoding based on the offloading is performed in the operation 705, the electronic device 101 may perform operation 715. In contrast, in a case that the decoding based on the offloading is not performed in the operation 705, the electronic device 101 may perform operation 710. For example, a case in which the decoding based on the offloading is not performed may represent a case of using a decoder 435 of the processor 400 inside the electronic device 101.

According to an embodiment, in the operation 710, the electronic device 101 may determine whether multi-frame decoding is supported. For example, the electronic device 101 may determine whether the decoder 435 in the processor 400 supports the multi-frame decoding. The multi-frame decoding may represent a function of simultaneously performing decoding on a plurality of frames. For example, the multi-frame decoding may be referred to as frame set decoding or chunk decoding.

In the operation 710, in a case that the multi-frame decoding is supported, the electronic device 101 may perform the operation 715. In contrast, in the operation 710, in a case that the multi-frame decoding is not supported, the electronic device 101 may perform operation 720.

According to an embodiment, in the operation 715, the electronic device 101 may determine frame set unit transmission. For example, the electronic device 101 may determine to transmit data to be decoded in units of a frame set to a decoder to perform decoding on the frame set.

According to an embodiment, in the operation 720, the electronic device 101 may determine frame unit transmission. For example, the electronic device 101 may determine to transmit data to be decoded in units of a frame to the decoder to perform the decoding on the frame set. For example, the electronic device 101 may transmit each of the one or more frames in the frame set individually.

FIG. 8A illustrates an example of an operation flow for a method of transmitting a frame set based on a codec type of a decoder, according to an embodiment. FIG. 8B illustrates an example of a frame set according to a codec type of a decoder, according to an embodiment.

The method of FIG. 8A may be performed by the electronic device 101 of FIG. 4. For example, operations of the method may be controlled by the processor 400 of the electronic device 101. Alternatively, for example, the operations of the method may be controlled by a plurality of processors that divide and perform functions of the processor 400. In the following embodiment, each operation may be sequentially performed, but is not necessarily performed sequentially. For example, an order of each operation may be changed, and at least two operations may be performed in parallel. The method of FIG. 8A may represent a specific example of the operation 520 to the operation 530 of FIG. 5.

Although not illustrated in FIG. 8A, the electronic device 101 may determine to transmit data of an audio content in units of a frame set to a decoder to perform decoding of the audio content. Hereinafter, for convenience of explanation, a case in which one frame set among the data of the audio content is transmitted to the decoder is assumed, but, embodiments of the present disclosure are not limited thereto. In this case, the frame set may include one or more frames.

According to an embodiment, in operation 800, the electronic device 101 may recognize a codec type. For example, the codec type may include advanced audio coding (AAC), Opus, or a mpeg layer 3 (MP3). However, the embodiments of the present disclosure are not limited thereto. For example, the codec type may further include other codec types. For example, the electronic device 101 may recognize the codec type of the data of the obtained audio content. Alternatively, for example, the electronic device 101 may also recognize the codec type of the decoder (e.g., a decoder 435 or a decoder 455) that will perform decoding on the data of the audio content.

According to an embodiment, in operation 805, the electronic device 101 may determine whether addition of a header is required based on the codec type. For example, the electronic device 101 may determine whether additional information (e.g., the header) is required to identify a position (or a time value) of each of the one or more frames in the frame set. For example, in a case that the codec type is the MP3, since the position of each of the frames in the frame set may be identified through a sync word, the addition of the header may not be required. In contrast, in a case that the codec type is the AAC codec or the Opus, since the position of each of the frames in the frame set may not be identified without the additional information, the addition of the header may be required.

In the operation 805, in a case that addition of the header is required, the electronic device 101 may perform operation 810. In contrast, in the operation 805, in a case that addition of the header is not required, the electronic device 101 may perform operation 820.

According to an embodiment, in the operation 810, the electronic device 101 may recognize a size of a frame by using frame configuration information. For example, the electronic device 101 may recognize the size of each of the one or more frames in the frame set by using the frame configuration information of the frame set. For example, by using information indicating the size of each of the one or more frames of the frame configuration information, the electronic device 101 may identify the size of each of the one or more frames in the frame set.

According to an embodiment, in operation 815, the electronic device 101 may generate and add a header according to the codec type. For example, the electronic device 101 may generate the header by using the frame configuration information. For example, the electronic device 101 may generate one or more headers by using information indicating the number of the one or more frames of the frame configuration information. For example, the number of the one or more headers may correspond to the number of the one or more frames. In this case, the frame configuration information used to generate and add the one or more headers may be removed from the frame set.

For example, in a case that the codec type is the advanced audio coding (AAC), the header may be an audio data transport stream (ADTS) header. The ADTS header, in a case that the transmission unit is a frame set, may be used to find a position of a frame next to a frame in which an error occurs in the frame set, in consideration of a decoding error (e.g., frame corruption). For example, the ADTS header may include information indicating the size of each of the one or more frames of the frame configuration information.

For example, in a case that the codec is the Opus, the header may be an Opus header. The Opus header, in a case that the transmission unit is the frame set, may be used to distinguish a position of frames in the frame set. For example, the Opus header may include information indicating the size of each of the one or more frames of the frame configuration information.

According to an embodiment, the electronic device 101 may add (or insert) the generated header into the frame set. For example, the electronic device 101 may add the header into the frame set to be concatenated to a frame corresponding to the header.

According to an embodiment, the electronic device 101 may generate header indication information added according to the codec type. For example, the header indication information may represent that the frame set includes the ADTS header or the Opus header. For example, the frame set to be transmitted to the decoder may further include the header indication information along with the header.

As described above, for a specific example of a method of generating and adding a header, FIG. 8B may be referred to.

Referring to FIG. 8B, a frame set 850 including a designated number (e.g., 5) of frames is illustrated, but embodiments of the present disclosure are not limited thereto. As an example, the designated number may be changed, or the frame set 850 may be reconfigured.

For example, the frame set 850 may include five frames 851, 852, 853, 854, and 855, and frame configuration information 857. For example, the frame configuration information 857 may include a time value of the frame 851, which is an initial frame among the frames 851, 852, 853, 854, and 855, the number of the frames 851, 852, 853, 854, and 855, a time duration of each of the frames 851, 852, 853, 854, and 855, and a size of each of the frames 851, 852, 853, 854, and 855.

For example, the electronic device 101 may determine whether addition of a header is required. For example, the electronic device 101 may determine that addition of the header is required in a case that a codec type of a decoder is an AAC codec or Opus. For example, in a case that addition of the header is required, the electronic device 101 may generate the header and add the header into a frame set. In this case, frame configuration information used for the generation and the addition of the header may be removed from the frame set.

For example, the frame set 860 may represent a frame set in a case that the codec type of the decoder is the AAC codec. For example, the electronic device 101 may generate five adts headers 861, 862, 863, 864, and 865 by using information indicating the number of the frame configuration information 857. For example, the adts header 861 may be concatenated to the frame 851 and may include information indicating a size of the frame 851. For example, the adts header 862 may be concatenated to the frame 852 and may include information indicating a size of the frame 852. For example, the adts header 863 may be concatenated to the frame 853 and may include information indicating a size of the frame 853. For example, the adts header 864 may be concatenated to the frame 854 and may include information indicating a size of the frame 854. For example, the adts header 865 may be concatenated to the frame 855 and may include information indicating a size of the frame 855.

For example, a frame set 870 may represent a frame set in a case that the codec type of the decoder is the Opus codec. For example, the electronic device 101 may generate five Opus headers 871, 872, 873, 874, and 875 by using information indicating the number of the frame configuration information 857. For example, the Opus header 871 may be concatenated to the frame 851 and may include information indicating the size of the frame 851. For example, the Opus header 872 may be concatenated to the frame 852 and may include information indicating the size of the frame 852.For example, the Opus header 873 may be concatenated to the frame 853 and may include information indicating the size of the frame 853. For example, the Opus header 874 may be concatenated to the frame 854 and may include information indicating the size of the frame 854. For example, the Opus header 875 may be concatenated to the frame 855 and may include information indicating the size of the frame 855. For example, each of the Opus headers 871, 872, 873, 874, and 875 may have a size of 4 bytes.

For example, a frame set 880 may represent a frame set in a case that the codec type of the decoder is the MP3. For example, in a case that the codec type is the MP3, since the addition of the header is not required, the electronic device 101 may generate the frame set 880 including the frames 851, 852, 853, 854, and 855.

Referring back to FIG. 8A, according to an embodiment, in the operation 820, the electronic device 101 may transmit a frame set. For example, the electronic device 101 may transmit the frame set to the decoder. For example, in a case that the addition of the header is required, the frame set may include the one or more frames and the one or more headers for the one or more frames. Alternatively, for example, in a case that the addition of the header is not required, the frame set may include the one or more frames.

FIG. 9 illustrates an example of an operation flow for a method of transmitting a frame set based on capability information of a decoder, according to an embodiment.

The method of FIG. 9 may be performed by the electronic device 101 of FIG. 4. For example, operations of the method may be controlled by the processor 400 of the electronic device 101. Alternatively, for example, the operations of the method may be controlled by a plurality of processors that divide and perform functions of the processor 400. In the following embodiment, each operation may be sequentially performed, but is not necessarily performed sequentially. For example, an order of each operation may be changed, and at least two operations may be performed in parallel.

According to an embodiment, in operation 900, the electronic device 101 may recognize a frame set. For example, the electronic device 101 may read the frame set including frame configuration information. For example, the electronic device 101 may read the frame set including the frame configuration information from the demuxer 405 of FIG. 4. For example, the frame set may include one or more frames and the frame configuration information for the one or more frames. For example, the one or more frames may include a plurality of frames having a designated number, or may include a remaining portion in which one or more other frames among the plurality of frames are removed according to reconfiguration of the frame set.

According to an embodiment, in operation 905, the electronic device 101 may recognize a size of a frame set that a decoder may support (hereinafter, a supportable size). For example, the electronic device 101 may obtain capability information of the decoder (or a processor including the decoder (e.g., a decoding processor 450)), and may recognize the supportable size of the frame set based on the capability information. For example, the supportable size may be determined based on a size of a frame buffer of the decoder or allowable latency time of a service (e.g., real-time streaming). For example, the supportable size may be referred to as a maximum size of the frame set that the decoder may support.

According to an embodiment, in operation 910, the electronic device 101 may determine whether the size of the frame set exceeds the supportable size. For example, the electronic device 101 may compare the size of the frame set with the supportable size. For example, as illustrated in FIG. 5, in a case that the frame set is reconfigured before the frame configuration information of the frame set is generated, the electronic device 101 may compare the size of the frame set with the maximum size when reconfiguring the frame set. Alternatively, for example, in a case that the frame configuration information of the frame set is generated, the electronic device 101 may compare the size of the frame set recognized using the frame configuration information with the maximum size.

In the operation 910, in a case that the size exceeds the maximum size, the electronic device 101 may perform operation 920. In contrast, in the operation 910, in a case that the size is equal to or less than the maximum size, the electronic device 101 may perform operation 915.

According to an embodiment, in the operation 915, the electronic device 101 may transmit the frame set to the decoder. For example, the electronic device 101 may perform processing on the frame set (e.g., addition of frame configuration information, or generation and addition of a header) without performing reconfiguration for reducing the size of the frame set, and may transmit the processed frame set to the decoder.

According to an embodiment, in the operation 920, the electronic device 101 may reconfigure the frame set. For example, in a case that the size exceeds the maximum size, the electronic device 101 may reconfigure the frame set such that the size of the frame set corresponds to the maximum size. For example, the number of the one or more frames included in the frame set may be changed to correspond to the maximum size.

According to an embodiment, in operation 925, the electronic device 101 may transmit the reconfigured frame set to the decoder. For example, after performing the reconfiguration so that the size of the frame set corresponds to the maximum size, the electronic device 101 may perform processing on the reconfigured frame set (e.g., addition of frame configuration information, or generation and addition of a header), and may transmit the processed frame set to the decoder.

FIGS. 10A to 10C illustrate an example of a signal flow between a plurality of processors for a method of outputting media using configuration information of a frame, according to an embodiment.

FIGS. 10A to 10C illustrate examples of the method performed by a plurality of processors 1001 and 1002. In FIGS. 10A to 10C, it is illustrated that the plurality of processors 1001 and 1002 include the first processor 1001 and the second processor 1002, but embodiments of the present disclosure are not limited thereto. For example, the plurality of processors 1001 and 1002 may include three or more processors.

According to an embodiment, the first processor 1001 and the second processor 1002 may be included in one processor (e.g., the processor 400 of FIG. 4). For example, each of the first processor 1001 and the second processor 1002 may distinguish and perform functions of the processor 400. In a case that the first processor 1001 and the second processor 1002 are included in one processor 400, the first processor 1001 and the second processor 1002 may be included in one electronic device (e.g., an electronic device 101).

Alternatively, according to an embodiment, the first processor 1001 and the second processor 1002 may be distinguished from each other. For example, the first processor 1001 may be the processor 400, and the second processor 1002 may be a decoding processor 450. In a case that the first processor 1001 is the processor 400 and the second processor 1002 is the decoding processor 450, the first processor 1001 and the second processor 1002 may be included in one electronic device (e.g., the electronic device 101).

Alternatively, according to an embodiment, each of the first processor 1001 and the second processor 1002 may be included in different electronic devices. For example, the first processor 1001 may be included in the electronic device 101, and the second processor 1002 may be included in an external electronic device connected to the electronic device 101. The external electronic device may include TWS or HMD for outputting sound.

Referring to FIG. 10A, in operation 1005, the first processor 1001 may perform reconfiguration of a frame set. For example, the first processor 1001 may perform reconfiguration of the requested frame set among frame sets configuring an audio content. For example, the frame set may include a frame indicated by a seek request, or may be a frame set next to a currently playing frame set.

In operation 1010, the first processor 1001 may generate frame configuration information. For example, the first processor 1001 may generate the frame configuration information of the frame set.

In FIG. 10A, an example in which the frame configuration information is generated after performing the reconfiguration of the frame set is illustrated, but the embodiments of the present disclosure are not limited thereto. For example, after generating the frame configuration information, the reconfiguration of the frame set may be performed by using the frame configuration information according to the received seek request. For example, the reconfiguration of the frame set may be performed by the first processor 1001 or the second processor 1002. According to an embodiment, the reconfiguration of the frame set may be performed based on capability information of a decoder to process the frame set (e.g., a size that the decoder may support or a maximum size).

In operation 1015, the first processor 1001 may generate and add a header. For example, the first processor 1001 may generate the header by using the frame configuration information and may add the header into the frame set. In operation 1020, the first processor 1001 may transmit the frame set to which the header is added to the second processor 1002.

In operation 1025, the second processor 1002 may perform decoding of the frame set. For example, the second processor 1002 may perform the decoding of the frame set received from the first processor 1001. Thereafter, the second processor 1002 may output (or play) the decoded frame set.

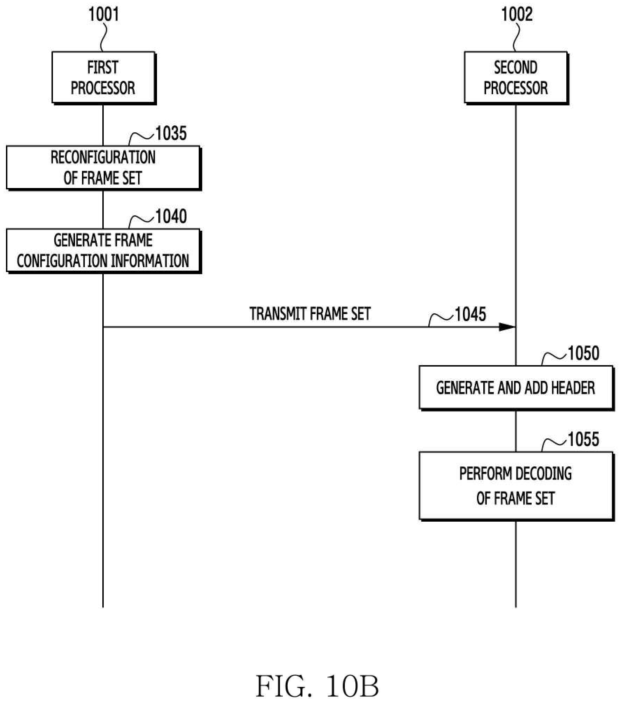

Referring to FIG. 10B, in operation 1035, the first processor 1001 may perform reconfiguration of a frame set. For example, the first processor 1001 may perform reconfiguration of the requested frame set among frame sets configuring an audio content. For example, the frame set may include a frame indicated by the seek request, or may be a frame set next to a currently playing frame set.

In operation 1040, the first processor 1001 may generate frame configuration information. For example, the first processor 1001 may generate the frame configuration information of the frame set.

In FIG. 10B, an example in which the frame configuration information is generated after performing the reconfiguration of the frame set is illustrated, but the embodiments of the present disclosure are not limited thereto. For example, after generating the frame configuration information, the reconfiguration of the frame set may be performed by using the frame configuration information according to the received seek request. For example, the reconfiguration of the frame set may be performed by the first processor 1001 or the second processor 1002. According to an embodiment, the reconfiguration of the frame set may be performed based on capability information of a decoder to process the frame set (e.g., a size that the decoder may support or a maximum size).

In operation 1045, the first processor 1001 may transmit the frame set including the frame configuration information to the second processor 1002.

In operation 1050, the second processor 1002 may generate and add a header. For example, the second processor 1002 may generate the header by using the frame configuration information of the received frame set, and may add the header into the frame set.

In operation 1055, the second processor 1002 may perform decoding of the frame set. For example, the second processor 1002 may perform the decoding of the frame set received from the first processor 1001. Thereafter, the second processor 1002 may output (or play) the decoded frame set.

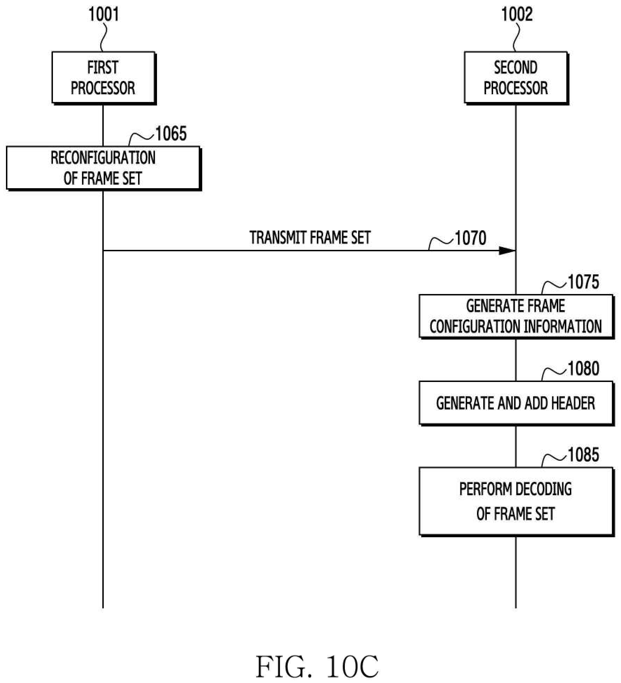

Referring to FIG. 10C, in operation 1065, the first processor 1001 may perform reconfiguration of a frame set. For example, the first processor 1001 may perform reconfiguration of the requested frame set among frame sets configuring an audio content. For example, the frame set may include a frame indicated by the seek request, or may be a frame set next to a currently playing frame set.

In operation 1070, the first processor 1001 may transmit the reconfigured frame set to the second processor 1002.

In operation 1075, the second processor 1002 may generate frame configuration information of the received frame set. For example, the second processor 1002 may generate the frame configuration information of the frame set.

In operation 1080, the second processor 1002 may generate and add a header. For example, the second processor 1002 may generate the header by using the frame configuration information of the received frame set, and may add the header into the frame set.

In operation 1085, the second processor 1002 may perform decoding of the frame set. For example, the second processor 1002 may perform the decoding of the frame set received from the first processor 1001. Thereafter, the second processor 1002 may output (or play) the decoded frame set.

In FIG. 10C, an example in which the frame configuration information is generated after performing the reconfiguration of the frame set is illustrated, but the embodiments of the present disclosure are not limited thereto. For example, the first processor 1001 may transmit the demuxed frame set to the second processor 1002, and after the second processor 1002 generates the frame configuration information of the frame set, the reconfiguration of the frame set may be performed by using the frame configuration information according to the received seek request. For example, the reconfiguration of the frame set may be performed by the first processor 1001 or the second processor 1002. According to an embodiment, the reconfiguration of the frame set may be performed based on capability information of a decoder to process the frame set (e.g., a size that the decoder may support or a maximum size).

According to an embodiment, the electronic device 101 may use at least one of the methods of FIGS. 10A to 10C while outputting the frame sets configuring the audio content. For example, the electronic device 101 may use the method of FIG. 10A for a first frame set among the frame sets configuring the audio content, and may use the method of FIG. 10B for a second frame set after the first frame set among the frame sets.

According to an embodiment, the electronic device 101 may select one of the methods of FIGS. 10A to 10C to be used while outputting the frame sets configuring the audio content by performing communication with the external electronic device connected to the electronic device 101. For example, the first processor 1001 of the electronic device 101 and the second processor 1002 of the external electronic device may process the first frame set among the frame sets configuring the audio content based on the method of FIG. 10A. Thereafter, the external electronic device may request the electronic device 101 to perform processing on the second frame set, which is next to the first frame set among the frame sets configuring the audio content, based on the method of FIG. 10C. For example, the external electronic device may transmit the request in a case that a battery of the external electronic device is sufficient (e.g., a case in which the battery of the external electronic device is being charged), a case in which communication performance between the external electronic device and the electronic device 101 is poor, or a case in which processing performance of the second processor 1002 of the external electronic device is good. The examples merely illustrate a case in which the external electronic device may perform a relatively large number of operations for processing a frame set, and the embodiments of the present disclosure are not limited thereto. In the example, a case in which the external electronic device may perform a relatively large number of operations is illustrated, but the embodiments of the present disclosure may also be applied to a case in which the external electronic device may perform a relatively small number of operations. For example, after the external electronic device performs processing on the second frame set configuring the audio content based on the method of FIG. 10C, the external electronic device may request to perform processing on a third frame set, which is next to the second frame set among the frame sets configuring the audio content, based on the method of FIG. 10A.

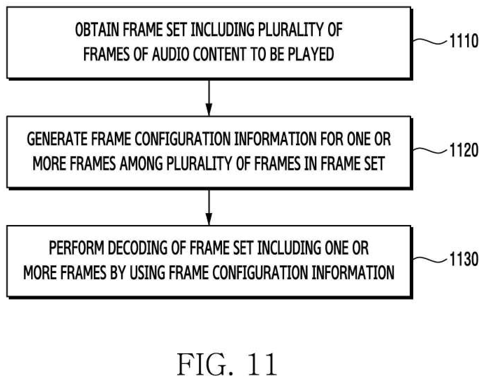

FIG. 11 illustrates an example of an operation flow for a method in which an electronic device generates frame configuration information of a frame set of an audio content and performs decoding using the generated frame configuration information, according to an embodiment.

The method of FIG. 11 may be performed by the electronic device 101 of FIG. 4. For example, operations of the method may be controlled by at least one processor of the electronic device 101. For example, as the at least one processor is executed individually or collectively, the operations may be controlled. For example, the at least one processor may include the processor 400 or the decoding processor 450 of FIG. 4. In the following embodiment, each operation may be sequentially performed, but is not necessarily performed sequentially. For example, an order of each operation may be changed, and at least two operations may be performed in parallel.

According to an embodiment, in operation 1110, the electronic device 101 may obtain a frame set including a plurality of frames of an audio content to be played. For example, a configuration unit of the audio content may be a frame set. The plurality of frames included in the frame set may correspond to a designated number of frames configuring the frame set.

According to an embodiment, in operation 1120, the electronic device 101 may generate frame configuration information of the frame set including one or more frames among the plurality of frames.

For example, the frame configuration information may include a time value (or a timestamp) indicating an initial frame among the one or more frames of the frame set in the audio content, the number of the one or more frames, a time duration of each of the one or more frames, and a size of each of the one or more frames. The frame configuration information of the frame set may be referred to as frame configuration information for the one or more frames in the frame set.

In the example, a case in which the frame configuration information includes the time value (or the timestamp) indicating the initial frame among the one or more frames in the media, the number of the one or more frames, the time duration of each of the one or more frames, and the size of each of the one or more frames is illustrated, but the present disclosure is not limited thereto. According to an embodiment, the frame configuration information may include at least one of the information of the example. For example, the frame configuration information may include the number of the one or more frames and the size of each of the one or more frames. In a case that the time value indicating the initial frame is obtained through other information and the time duration of each of the one or more frames are identical to each other, the frame configuration information may include information indicating the number and the size among the time value, the number, the time duration, and the size. Alternatively, for example, the frame configuration information may include information indicating the size among the time value, the number, the time duration, and the size.

For example, in a case that a seek request is received, the time value indicating the initial frame may represent a time value indicating a frame, indicated by the seek request, which is an initial frame among the one or more frames. For example, the number of the one or more frames may indicate the number of frames included in the reconfigured frame set. For example, the time duration of each of the one or more frames may represent a time length of each frame included in the reconfigured frame set. For example, the size of each of the one or more frames may include the number of bits (or bytes) of each frame included in the reconfigured frame set. For example, the time value and the time duration may be calculated based on at least one of a file format of the media (or a specification of the file format), a codec type by which the media is encoded, a bit rate, or a sampling rate of the media.

According to an embodiment, the one or more frames in the frame set may include the plurality of frames having the designated number configuring the frame set. For example, in a case that the seek request is not received, the electronic device 101 may identify the one or more frames including the plurality of frames having the designated number. Alternatively, for example, in a case that the electronic device 101 determines that reconfiguration of the frame set is not required according to the seek request, the electronic device 101 may identify the one or more frames including the plurality of frames having the designated number.

According to an embodiment, the one or more frames in the frame set may include a portion of the plurality of frames having the designated number configuring the frame set. For example, in a case that the electronic device 101 determines that reconfiguration of the frame set is required according to the seek request, the electronic device 101 may remove one or more other frames among the plurality of frames having the designated number. The one or more frames may represent a remaining portion in which the one or more other frames are removed from among the plurality of frames. For example, the initial frame among the one or more frames may be the frame indicated by the seek request.

Although not illustrated in FIG. 11, for a specific content of a method of generating the frame configuration information, FIGS. 6A to 6C may be referred to.

According to an embodiment, in operation 1130, the electronic device 101 may perform decoding of the frame set including the one or more frames by using the frame configuration information.

For example, the electronic device 101 may recognize (or read) the frame set including the one or more frames and the frame configuration information for the one or more frames. For example, the electronic device 101 may determine a transmission unit of data to be transmitted to a decoder that may perform decoding of the recognized frame set. For example, for a specific content of a method of determining the transmission unit, FIG. 7 may be referred to.

For example, in a case that the electronic device 101 determines the transmission unit as the frame set, the electronic device 101 may recognize a codec type and may determine whether addition of a header is required based on the codec type. For example, in a case that the addition of the header is required, the electronic device 101 may generate a header according to the codec type by using the frame configuration information and may add the generated header into the frame set. In this case, the frame configuration information may be removed from the frame set. For example, in a case that the addition of the header is not required, the electronic device 101 may remove the frame configuration information from the frame set. The electronic device 101 may transmit, according to the codec type, the frame set to which the header is added or the frame set to which the header is not added, to the decoder. For a specific content of a method of determining whether the addition of the header is required according to the codec type and transmitting the frame set to the decoder, FIGS. 8A and 8B may be referred to.

According to an embodiment, the frame set transmitted to the decoder may be decoded. For example, the decoder may be included in the at least one processor. The decoded frame set may be output (or played) through a sound output device of the electronic device 101 or a sound output device of an external electronic device connected to the electronic device 101.

Although not illustrated in FIG. 11, according to an embodiment, the electronic device 101 may recognize a maximum size of a frame set that the decoder may support, and may reconfigure the frame set to correspond to the maximum size. For a specific content of a method of recognizing the maximum size and reconfiguring the frame set, FIG. 9 may be referred to.

Referring to the above, a device, a method, and a storage medium according to an embodiment of the present disclosure may generate frame configuration information including the number of frames included in a frame set, a size of each of the frames, a time duration of each of the frames, and a timestamp indicating an initial frame of the frame set, and the device, the method, and the storage medium according to the embodiment of the present disclosure may, even when the media is configured in units of a frame set, accurately recognize a frame according to a seek request and perform an accurate seek operation by removing an unnecessary frame by using the configuration information. In addition, the device, the method, and the storage medium according to the embodiment of the present disclosure may perform recovery when an error occurs in decoding by transmitting, to a decoder, a frame set including the configuration information, even when decoding is performed for each frame set (e.g., offloading). In addition, in a case that a streaming service through a network is provided, the device, the method, and the storage medium according to the embodiment of the present disclosure may prevent latency by adjusting a size of the frame set in advance.

The effects that can be obtained from the present disclosure are not limited to those described above, and any other effects not mentioned herein will be clearly understood by those having ordinary knowledge in the art to which the present disclosure belongs, from the following description.

As described above, an electronic device 101 may comprise memory 130 storing instructions. The electronic device 101 may comprise at least one processor 400 or 450. The instructions, when executed by the at least one processor 400 or 450 individually or collectively, may cause the electronic device 101 to obtain a frame set including a plurality of frames of an audio content to be played. The instructions, when executed by the at least one processor 400 or 450 individually or collectively, may cause the electronic device 101 to generate frame configuration information of the frame set including one or more frames from among the plurality of frames. The frame configuration information may include the number of the one or more frames and a size of each of the one or more frames. The instructions, when executed by the at least one processor 400 or 450 individually or collectively, may cause the electronic device 101 to perform decoding of the frame set including the one or more frames using the frame configuration information.

According to an embodiment, the instructions, when executed by the at least one processor 400 or 450 individually or collectively, may cause the electronic device 101 to determine whether a seek request for the audio content is received. The instructions, when executed by the at least one processor 400 or 450 individually or collectively, may cause the electronic device 101 to, in a case that the seek request is not received, identify the one or more frames including the plurality of frames. The instructions, when executed by the at least one processor 400 or 450 individually or collectively, may cause the electronic device 101 to, in a case that the seek request is received, obtain a time value of a frame indicated by the seek request.

According to an embodiment, the instructions, when executed by the at least one processor 400 or 450 individually or collectively, may cause the electronic device 101 to determine whether the frame having the time value is an initial frame from among the plurality of frames. The instructions, when executed by the at least one processor 400 or 450 individually or collectively, may cause the electronic device 101 to, in a case that the frame is the initial frame from among the plurality of frames, identify the one or more frames including the plurality of frames. The instructions, when executed by the at least one processor 400 or 450 individually or collectively, may cause the electronic device 101 to, in a case that the frame is different from the initial frame from among the plurality of frames, remove one or more other frames prior to the time value of the frame from among the plurality of frames, and reconfigure the frame set configured as the plurality of frames to include the one or more frames including the frame which are different from the one or more other frames from among the plurality of frames.

According to an embodiment, the instructions, when executed by the at least one processor 400 or 450 individually or collectively, may cause the electronic device 101 to recognize a codec type for the decoding. The instructions, when executed by the at least one processor 400 or 450 individually or collectively, may cause the electronic device 101 to generate, using the frame configuration information, one or more headers determined according to the codec type. Each of the one or more headers may include the size of each of the one or more frames of the frame configuration information. The instructions, when executed by the at least one processor 400 or 450 individually or collectively, may cause the electronic device 101 to insert the one or more headers into the frame set including the one or more frames. The decoding may be performed with respect to the frame set in which the one or more headers are added.

According to an embodiment, the codec type may include advanced audio coding (AAC) or Opus.

According to an embodiment, the frame configuration information may further include a time value indicating an initial frame from among the one or more frames within the audio content and a time duration of each of the one or more frames. The number of the one or more headers may correspond to the number of the one or more frames. Each of the one or more headers may be concatenated, using the time value, the number of the one or more frames, and the time duration of each of the one or more frames of the frame configuration information, with respect to the one or more frames respectively.

According to an embodiment, each of the time value and the time duration of the frame configuration information may be calculated based on at least one of a format of the audio content, a bit rate of the audio content, or a sampling rate of the audio content.

According to an embodiment, the audio content may be output, based on the decoded frame set, through the electronic device 101 or an external electronic device connected to the electronic device 101.

According to an embodiment, the number of the one or more frames may correspond to a maximum size of the frame set capable of being supported by a decoder for the decoding.

According to an embodiment, the instructions, when executed by the at least one processor 400 or 450 individually or collectively, may cause the electronic device 101 to receive a seek request for the audio content after generating the frame configuration information for the one or more frames including the plurality of frames. The instructions, when executed by the at least one processor 400 or 450 individually or collectively, may cause the electronic device 101 to, in a case that a time value of a frame indicated by the seek request is different from a time value indicating an initial frame from among the one or more frames of the frame configuration information, identify, using the frame configuration information, one or more other frames subsequent to the time value of the frame from among the one or more frames. The instructions, when executed by the at least one processor 400 or 450 individually or collectively, may cause the electronic device 101 to reconfigure the frame set configured as the one or more frames to include the one or more other frames.

As described above, in a method performed by an electronic device 101, the method may comprise obtaining a frame set including a plurality of frames of an audio content to be played. The method may comprise generating frame configuration information of the frame set including one or more frames from among the plurality of frames. The frame configuration information may include the number of one or more frames and a size of each of the one or more frames. The method may comprise performing decoding of the frame set including the one or more frames using the frame configuration information.

As described above, a non-transitory computer-readable storage medium, when executed individually or collectively by at least one processor 400 or 450 of an electronic device 101, may store one or more programs including instructions that cause the electronic device 101 to obtain a frame set including a plurality of frames of an audio content to be played. The non-transitory computer-readable storage medium, when executed individually or collectively by the at least one processor 400 or 450 of the electronic device 101, may store one or more programs including instructions that cause the electronic device 101 to generate frame configuration information of the frame set including one or more frames from among the plurality of frames. The frame configuration information may include the number of one or more frames and a size of each of the one or more frames. non-transitory computer-readable storage medium, when executed individually or collectively by at least one processor 400 or 450 of an electronic device 101, may store one or more programs including instructions that cause the electronic device 101 to perform decoding of the frame set including the one or more frames using the frame configuration information.

As described above, an electronic device 101 may comprise a first processor 400. The electronic device 101 may comprise a second processor 450 for decoding an audio content. The first processor 400 may be configured to obtain a frame set including a plurality of frames of the audio content. The first processor 400 may be configured to generate frame configuration information of the frame set including one or more frames from among the plurality of frames. The frame configuration information may include the number of the one or more frames and a size of each of the one or more frames. The first processor 400 may be configured to generate, using the frame configuration information, one or more headers determined according to a codec type. Each of the one or more headers may include the size of each of the one or more frames. The first processor 400 may be configured to transmit, to the second processor 450, the one or more headers and the frame set including the one or more frames. The second processor 450 may be configured to perform the decoding of the frame set.

According to an embodiment, the first processor 400 may be configured to determine whether a seek request for the audio content is received. The first processor 400 may be configured, in a case that the seek request is not received, identify the one or more frames including the plurality of frames. The first processor 400 may be configured, in a case that the seek request is received, obtain a time value of a frame indicated by the seek request.

According to an embodiment, the first processor 400 may be configured to determine whether the frame having the time value is an initial frame from among the plurality of frames. The first processor 400 may be configured to, in a case that the frame is the initial frame from among the plurality of frames, identify the one or more frames including the plurality of frames. The first processor 400 may be configured to, in a case that the frame is different from the initial frame from among the plurality of frames, remove one or more other frames prior to the time value of the frame from among the plurality of frames, and reconfigure the frame set configured as the plurality of frames to include the one or more frames including the frame which are different from the one or more other frames from among the plurality of frames.

According to an embodiment, the first processor 400 may be configured to recognize a codec type for the decoding. The first processor 400 may be configured to insert the one or more headers determined according to the recognized codec type into the frame set including the one or more frames.

According to an embodiment, the first processor 400 may be configured to, together with the frame set including the one or more headers and the one or more frames, transmit information indicating that the frame set includes the one or more headers to the second processor 450.

According to an embodiment, the codec type may include advanced audio coding (AAC) or Opus.

According to an embodiment, the frame configuration information may further include a time value indicating an initial frame from among the one or more frames within the audio content and a time duration of each of the one or more frames. The number of the one or more headers may correspond to the number of the one or more frames. Each of the one or more headers may be concatenated, using the time value, the number of the one or more frames, and the time duration of each of the one or more frames of the frame configuration information, with respect to the one or more frames respectively.

According to an embodiment, each of the time value and the time duration of the frame configuration information may be calculated based on at least one of a format of the audio content, a bit rate of the audio content, or a sampling rate of the audio content.

According to an embodiment, the second processor 450 may be configured to transmit the decoded frame set to a sound output device of the electronic device 101 or an external electronic device connected to the electronic device 101. The audio content may be output based on the decoded frame set.

According to an embodiment, the second processor 450 may be configured to transmit capability information indicating a maximum size of the frame set capable of being supported by the second processor 450, to the first processor 400. The first processor 400 may be configured to identify the one or more frames corresponding to the maximum size based on the capability information.

As described above, a method performed by an electronic device 101 may comprise obtaining a frame set including a plurality of frames of an audio content. The method may comprise generating frame configuration information of the frame set including one or more of the plurality of frames. The frame configuration information may include the number of the one or more frames and a size of each of the one or more frames. The method may comprise generating, using the frame configuration information, one or more headers determined according to a codec type of a decoder. Each of the one or more headers may include the size of each of the one or more frames. The method may comprise transmitting the frame set including the one or more headers and the one or more frames to the decoder. The method may comprise performing the decoding of the frame set.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
memory 130 storing instructions including one or more storage media; and
at least one processor (400, 450) including processing circuitry,
wherein the instructions, when executed by the at least one processor (400, 450) individually or collectively, cause the electronic device (101) to:
obtain a frame set including a plurality of frames of an audio content to be played;
generate frame configuration information of the frame set including one or more frames from among the plurality of frames, wherein the frame configuration information includes the number of one or more frames and a size of each of the one or more frames; and
perform decoding of the frame set including the one or more frames using the frame configuration information.

2. The electronic device 101 of claim 1,
wherein the instructions, when executed by the at least one processor (400, 450) individually or collectively, cause the electronic device 101 to:
determine whether a seek request for the audio content is received;
in case that the seek request is not received, identify the one or more frames including the plurality of frames; and
in case that the seek request is received, obtain a time value of a frame indicated by the seek request.

3. The electronic device 101 of claim 2,
wherein the instructions, when executed by the at least one processor (400, 450) individually or collectively, cause the electronic device 101 to:
determine whether the frame having the time value is an initial frame from among the plurality of frames;
in case that the frame is the initial frame from among the plurality of frames, identify the one or more frames including the plurality of frames; and
in case that the frame is different from the initial frame from among the plurality of frames:
remove one or more another frames prior to the time value of the frame from among the plurality of frames; and
reconfigure the frame set configured as the plurality of frames to include the one or more frames including the frame which are different from the one or more another frames from among the plurality of frames.

4. The electronic device 101 of claim 1,
wherein the instructions, when executed by the at least one processor (400, 450) individually or collectively, cause the electronic device 101 to:
recognize a codec type for the decoding;
generate, using the frame configuration information, one or more headers determined according to the codec type, wherein each of the one or more headers includes the size of each of the one or more frames of the frame configuration information; and
insert the one or more headers to the frame set including the one or more frames,
wherein the decoding is performed with respect to the frame set added the one or more headers.

5. The electronic device 101 of claim 4,
wherein the codec type includes advanced audio coding (AAC) or Opus.

6. The electronic device 101 of claim 4,
wherein the frame configuration information further includes a time value indicating an initial frame from among the one or more frames within the audio content and a time duration of each of the one or more frames,
wherein the number of the one or more headers corresponds to the number of the one or more frames, and
wherein each of the one or more headers is concatenated, using the time value, the number of the one or more frames, and the time duration of each of the one or more frames of the frame configuration information, with respect to the one or more frames respectively.

7. The electronic device 101 of claim 6,
wherein each of the time value and the time duration of the frame configuration information is calculated based on at least one of a format of the audio content, a bit rate of the audio content, or a sampling rate of the audio content.

8. The electronic device 101 of claim 1,
wherein the audio content is output, based on the decoded frame set, through the electronic device 101 or an external electronic device connected to the electronic device 101.

9. The electronic device 101 of claim 1,
wherein the number of the one or more frames corresponds to a maximum size of the frame set being capable of supporting by a decoder for the decoding.

10. The electronic device 101 of claim 1,
wherein the instructions, when executed by the at least one processor (400, 450) individually or collectively, cause the electronic device 101 to:
receive a seek request for the audio content after generating the frame configuration information for the one or more frames including the plurality of frames;
in case that a time value of a frame indicated by the seek request is different from a time value indicating an initial frame from among the one or more frames of the frame configuration information, identify, using the frame configuration information, one or more another frames subsequent to the time value of the frame from among the one or more frames; and
reconfigure the frame set configured as the one or more frames to include the one or more another frames.

11. A method performed by an electronic device 101 comprising:
obtaining a frame set including a plurality of frames of an audio content to be played;
generating frame configuration information of the frame set including one or more frames from among the plurality of frames, wherein the frame configuration information includes the number of one or more frames and a size of each of the one or more frames; and
performing decoding of the frame set including the one or more frames using the frame configuration information.

12. The method of claim 11, wherein the method comprises:
determining whether a seek request for the audio content is received;
in case that the seek request is not received, identifying the one or more frames including the plurality of frames; and
in case that the seek request is received, obtaining a time value of a frame indicated by the seek request.

13. The method of claim 12, wherein the method comprises:
determining whether the frame having the time value is an initial frame from among the plurality of frames;
in case that the frame is the initial frame from among the plurality of frames, identifying the one or more frames including the plurality of frames; and
in case that the frame is different from the initial frame from among the plurality of frames:
removing one or more another frames prior to the time value of the frame from among the plurality of frames; and
reconfiguring the frame set configured as the plurality of frames to include the one or more frames including the frame which are different from the one or more another frames from among the plurality of frames.

14. The method of claim 11, wherein the method comprises:
recognizing a codec type for the decoding;
generating, using the frame configuration information, one or more headers determined according to the codec type, wherein each of the one or more headers includes the size of each of the one or more frames of the frame configuration information; and
inserting the one or more headers to the frame set including the one or more frames,
wherein the decoding is performed with respect to the frame set added the one or more headers.

15. A non-transitory computer-readable storage medium, when executed individually or collectively by at least one processor (400, 450) of an electronic device 101, storing one or more programs including instructions that cause the electronic device 101 to:
obtain a frame set including a plurality of frames of an audio content to be played;
generate frame configuration information of the frame set including one or more frames from among the plurality of frames, wherein the frame configuration information includes the number of one or more frames and a size of each of the one or more frames; and
perform decoding of the frame set including the one or more frames using the frame configuration information.
